(19) Europäisches Patentamt / European Patent Office / Office européen des brevets

(11) **EP 4 099 799 A1**

(12) **EUROPEAN PATENT APPLICATION**
published in accordance with Art. 153(4) EPC

(43) Date of publication:
**07.12.2022 Bulletin 2022/49**

(21) Application number: **21747410.5**

(22) Date of filing: **28.01.2021**

(51) International Patent Classification (IPC):
**H05B 3/10** $^{(2006.01)}$     **H05B 3/20** $^{(2006.01)}$
**H01B 5/14** $^{(2006.01)}$

(52) Cooperative Patent Classification (CPC):
**H05B 3/84; H01B 5/14;** H05B 2203/013;
Y02B 30/00

(86) International application number:
**PCT/JP2021/003031**

(87) International publication number:
**WO 2021/153668 (05.08.2021 Gazette 2021/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.01.2020 JP 2020012703**
**29.01.2020 JP 2020012704**

(71) Applicant: **Asahi Kasei Kabushiki Kaisha Tokyo 1000006 (JP)**

(72) Inventor: **KOMATSU, Kazuma Tokyo 100-0006 (JP)**

(74) Representative: **dompatent von Kreisler Selting Werner - Partnerschaft von Patent- und Rechtsanwälten mbB Deichmannhaus am Dom Bahnhofsvorplatz 1 50667 Köln (DE)**

(54) **TRANSPARENT HEATER**

(57) A transparent heater comprising a conductive film and a connection part connectable to a power feeding apparatus, the conductive film comprising a transparent substrate and a conductive part comprising a fine metal wire pattern disposed on one side or both sides of the transparent substrate, wherein the fine metal wire pattern is constituted by a fine metal wire, and the fine metal wire has voids, and when the cross-sectional area of the fine metal wire is defined as $S_M$ and the total cross-sectional area of the voids included in the cross-section of the fine metal wire is defined as $S_{Vtotal}$ on the cross-section of the fine metal wire perpendicular to the direction of drawing of the fine metal wire, $S_{Vtotal} / S_M$ is 0.10 or more and 0.40 or less.

Figure 1

EP 4 099 799 A1

**Description**

Technical Field

The present invention relates to a transparent heater.

Background Art

Transparent conductive films provided with indium tin oxide (hereinafter, also referred to as "ITO") or the like have heretofore been used. Since ITO has a low electrical conductivity unique to the material, larger film thicknesses are necessary for exerting high conductivity and however, reduce transmittances. Such larger film thicknesses easily cause cracks due to deformation such as bending, deflection, or flexion. It is therefore difficult for conductive films containing ITO to achieve high transmittances, conductivity, and flexion resistance at the same time.

Accordingly, research and development are actively underway on conductive films serving as an alternative to ITO. Conductive films having a fine metal wire patterned on a transparent substrate have received attention. The fine metal wire has a higher electrical conductivity than that of ITO which is an oxide. Conductive films comprising this fine metal wire are expected to exhibit high conductivity. The fine metal wire also has high drawability. The conductive films comprising this fine metal wire are therefore excellent in conductivity and flexion resistance.

On the other hand, unlike ITO, the fine metal wire is opaque and therefore highly visible. However, low visibility and high transmittance need to be achieved by thinning the fine metal wire so as to have a line width of 5 $\mu$m or smaller. In this respect, Non Patent Literature 1 discloses a technique of preparing a fine metal wire having a minimum line width of 0.8 $\mu$m on a plastic substrate by printing.

A problem of the conductive films comprising the fine metal wire is that the breaking or peeling from a transparent substrate of the fine metal wire occurs due to deformation such as bending, deflection, or flexion in handling or device mounting, easily reducing conductivity or causing defects. In response to such a problem, a method of forming a porous layer between a transparent resin substrate and a fine metal wire pattern, and forming a transparent conductive protective layer on the fine metal wire pattern is known as a method for providing a transparent electrode having a fine metal wire pattern having favorable adhesion to a substrate (see, for example, Patent Literatures 1 and 2). The porous layer of Patent Literature 1 has pores in the middle of production. However, this porous layer is used as an anchor layer where the pores are filled with ink during fine metal wire formation, and loses the pores in the state of a finally obtained transparent electrode.

A method for obtaining a fine metal wire pattern by filling concave parts disposed in advance in a substrate with ink made of metal particles, followed by sintering has also been proposed (see, for example, Patent Literature 3).

Citation List

Non Patent Literature

Non Patent Literature 1: Nature Communications 7, Article number: 11402

Patent Literature

        Patent Literature 1: International Publication No. WO 2014/034920
        Patent Literature 2: Japanese Patent Laid-Open No. WO 2017-098054
        Patent Literature 3: Japanese Patent Laid-Open No. WO 2016-139688

Summary of Invention

Technical Problem

In this context, the line width of the fine metal wire studied in Patent Literature 1 is 10 $\mu$m or larger. The studies of the inventors have revealed that in the case of using a fine metal wire having a line width of, for example, 5 $\mu$m or smaller, even if a porous layer as described in Patent Literature 1 is used in order to improve transparency required for transparent heaters, the conductivity of conductive films is disadvantageously reduced due to their deformation such as bending, deflection, or flexion. The inventors have also found that, due to such a problem, in the case of using a conductive film in a heater, the heater presents a flexural resistance problems in such a way that partial breaking results from the flexion of the conductive film portion, for example, when the heater is affixed to a specific site, and decreases the achievable temperature of the heater.

The line width of the fine metal wire studied in Patent Literature 2 is also 10 $\mu$m or larger, which cannot attain sufficient transparency. For example, in a transparent heater as shown in Patent Literature 1, a sealing layer can be formed on the fine metal wire for the purpose of preventing conductivity from being reduced due to the oxidation over time of metal atoms constituting an exposed fine metal wire. However, the cross-sectional shape of a general fine metal wire is a substantially square or substantially rectangular shape. A found preservability problem of an attempt to sufficiently protect such a fine metal wire with a sealing layer is that a small-thickness portion of the sealing layer appears and reduces conductivity because the fine metal wire is oxidized over time from a site where the fine metal wire is not sufficiently protected with the sealing layer.

The method for forming a fine metal wire disclosed in Patent Literature 3 is a method of providing beforehand a substrate provided with fine concave parts, filling the concave parts with ink, followed by sintering and subsequent removal of excess portions. Thus, this method requires a complicated process and is industrially difficult. A further problem of the method for forming a fine metal wire disclosed in Patent Literature 3 is that such a complicated process facilitates the breaking of the resulting fine metal wire and makes it difficult to industrially produce the fine metal wire with good reproducibility.

An object of the present invention according to the first embodiment is to provide a transparent heater that is excellent in flexion resistance while having excellent transparency and a low electrical resistance value.

Another object of the present invention according to the second embodiment is to provide a transparent heater that is excellent in preservability while having excellent transparency and a low electrical resistance value.

Solution to Problem

The present inventors have conducted diligent studies to attain the object. As a result, the present inventors have found that voids are disposed in a fine metal wire, and the ratio of the total cross-sectional area of the voids to the cross-sectional area of the fine metal wire can be adjusted to a specific range, thereby suppressing the breaking or peeling from a transparent substrate of the fine metal wire ascribable to the deformation, such as bending, deflection, or flexion, of a conductive film having the fine metal wire, whereby the object can be attained, leading to the completion of the present invention.

Specifically, the first embodiment of the present invention is as follows.

[1] A transparent heater comprising a conductive film and a connection part connectable to a power feeding apparatus,

the conductive film comprising a transparent substrate and a conductive part comprising a fine metal wire pattern disposed on one side or both sides of the transparent substrate, wherein
the fine metal wire pattern is constituted by a fine metal wire, and
the fine metal wire has voids, and when the cross-sectional area of the fine metal wire is defined as $S_M$ and the total cross-sectional area of the voids included in the cross-section of the fine metal wire is defined as $S_{Vtotal}$ on the cross-section of the fine metal wire perpendicular to the direction of drawing of the fine metal wire, $S_{Vtotal}$ / $S_M$ is 0.10 or more and 0.40 or less.

[2] The transparent heater according to [1], wherein
the fine metal wire has the voids on the fine metal wire interface on the transparent substrate side.
[3] The transparent heater according to [1] or [2], wherein
when the maximum thickness of the fine metal wire is defined as T and the cross-sectional area of the voids in a thickness region from the fine metal wire interface to 0.2T on the transparent substrate side is defined as $S_{V0.2}$, $S_{V0.2}$ / $S_{Vtotal}$ is 0.15 or more and 0.60 or less.
[4] The transparent heater according to any of [1] to [3], wherein
when the maximum thickness of the fine metal wire is defined as T and the cross-sectional area of the voids in a thickness region from the fine metal wire interface to 0.8T on the transparent substrate side is defined as $S_{V0.8}$, $S_{V0.8}$ / $S_{Vtotal}$ is 0.80 or more and 1.00 or less.
[5] The transparent heater according to any of [1] to [4], wherein
$(S_{V0.2} + S_{V0.8})$ / $S_{Vtotal}$ is more than 1.00 and 1.60 or less.
[6] The transparent heater according to any of [1] to [5], wherein
a line width of the fine metal wire is 0.1 $\mu$m or larger and 5.0 $\mu$m or smaller.
[7] The transparent heater according to any of [1] to [6], wherein
an aspect ratio of the fine metal wire is 0.05 or more and 1.00 or less.
[8] The transparent heater according to any of [1] to [7], wherein

a sheet resistance of the conductive film is 0.1 Ω/sq or more and 50 Ω/sq or less.

[9] The transparent heater according to any of [1] to [8], wherein
a visible light transmittance of the conductive film is 80% or more and 100% or less.

[10] The transparent heater according to any of [1] to [9], wherein
a haze of the conductive film is 0.01% or more and 5.00% or less.

[11] The transparent heater according to any of [1] to [10], wherein
an opening ratio of the fine metal wire pattern is 80% or more and less than 100%.

[12] The transparent heater according to any of [1] to [11], wherein
the fine metal wire pattern is a mesh pattern.

[13] The transparent heater according to any of [1] to [12], wherein
the fine metal wire pattern is a line pattern.

[14] The transparent heater according to any of [1] to [13], wherein
the fine metal wire comprises at least one or more metal elements selected from the group consisting of gold, silver, copper and aluminum.

[15] The transparent heater according to any of [1] to [14], wherein
the conductive film further comprises a sealing layer on the conductive part.

[16] The transparent heater according to any of [1] to [15], wherein
the conductive film comprises an intermediate layer between the transparent substrate and the conductive part.

[17] The transparent heater according to [16], wherein
the intermediate layer comprises at least one member selected from the group consisting of silicon oxide, silicon nitride, aluminum oxide, and magnesium fluoride.

The present inventors have conducted diligent studies to attain the object. As a result, the present inventors also have found that when the maximum thickness of the fine metal wire on the cross-section of the fine metal wire perpendicular to the direction of drawing of the fine metal wire is defined as T, the line width of the fine metal wire at a height of 0.90T from the fine metal wire interface on the transparent substrate side is defined as $W_{0.90}$ and the line width of the fine metal wire on the fine metal wire interface is defined as $W_0$, $W_{0.90} / W_0$ can be adjusted to a specific range, whereby the object can be attained, leading to the completion of the present invention.

Specifically, the second embodiment of the present invention is as follows.

[1] A transparent heater comprising a conductive film and a connection part connectable to a power feeding apparatus,

the conductive film comprising a transparent substrate and a conductive part comprising a fine metal wire pattern disposed on one side or both sides of the transparent substrate, wherein
the fine metal wire pattern is constituted by a fine metal wire, and
when the maximum thickness of the fine metal wire on the cross-section of the fine metal wire perpendicular to the direction of drawing of the fine metal wire is defined as T, the line width of the fine metal wire at a height of 0.90T from the fine metal wire interface on the transparent substrate side is defined as $W_{0.90}$ and the line width of the fine metal wire on the fine metal wire interface is defined as $W_0$, $W_{0.90} / W_0$ is 0.40 or more and 0.90 or less.

[2] The transparent heater according to [1], wherein
when the line width of the fine metal wire at a thickness of 0.50T from the fine metal wire interface on the transparent substrate side is defined as $W_{0.50}$, $W_{0.50} / W_0$ is 0.70 or more and less than 1.00.

[3] The transparent heater according to [1] or [2], wherein
$W_{0.90} / W_{0.50}$ is 0.50 or more and 0.95 or less.

[4] The transparent heater according to any of [1] to [3], wherein
$W_{0.50} / W_0$ is larger than $W_{0.90} / W_{0.50}$.

[5] The transparent heater according to any of [1] to [4], wherein
a line width of the fine metal wire is 0.1 μm or larger and 5.0 μm or smaller.

[6] The transparent heater according to any of [1] to [5], wherein
an aspect ratio of the fine metal wire is 0.05 or more and 1.00 or less.

[7] The transparent heater according to any of [1] to [6], wherein
a sheet resistance of the conductive film is 0.1 Ω/sq or more and 50 Ω/sq or less.

[8] The transparent heater according to any of [1] to [7], wherein
a visible light transmittance of the conductive film is 80% or more and 100% or less.

[9] The transparent heater according to any of [1] to [8], wherein
a haze of the conductive film is 0.01% or more and 5.00% or less.

[10] The transparent heater according to any of [1] to [9], wherein

an opening ratio of the fine metal wire pattern is 80% or more and less than 100%.

[11] The transparent heater according to any of [1] to [10], wherein
the fine metal wire pattern is a mesh pattern.

[12] The transparent heater according to any of [1] to [11], wherein
the fine metal wire pattern is a line pattern.

[13] The transparent heater according to any of [1] to [12], wherein
the fine metal wire comprises at least one or more metal elements selected from the group consisting of gold, silver, copper and aluminum.

[14] The transparent heater according to any of [1] to [13], wherein
the conductive film further comprises a sealing layer on the conductive part.

[15] The transparent heater according to any of [1] to [14], wherein
the conductive film comprises an intermediate layer between the transparent substrate and the conductive part.

[16] The transparent heater according to [15], wherein
the intermediate layer comprises at least one member selected from the group consisting of silicon oxide, silicon nitride, aluminum oxide, and magnesium fluoride.

Advantageous Effects of Invention

The first embodiment of the present invention can provide a transparent heater that is excellent in flexion resistance while having excellent transparency and a low electrical resistance value.

The second embodiment of the present invention can provide a transparent heater that is excellent in preservability while having excellent transparency and a low electrical resistance value.

Brief Description of Drawings

[Figure 1] Figure 1 shows a conceptual configuration view of the transparent heater according to the first embodiment or the second embodiment.

[Figure 2] Figure 2 shows a conceptual top view showing a fine metal wire pattern of a conductive film according to one form of the first embodiment or the second embodiment.

[Figure 3] Figure 3 shows a conceptual top view showing a fine metal wire pattern of a conductive film according to another form of the first embodiment or the second embodiment.

[Figure 4] Figure 4 shows a conceptual top view showing a fine metal wire pattern of a conductive film according to an alternative form of the first embodiment or the second embodiment.

[Figure 5] Figure 5 shows a conceptual top view showing a fine metal wire pattern of a conductive film according to an alternative form of the first embodiment or the second embodiment.

[Figure 6] Figure 6 shows a partial cross-sectional diagrammatic view taken along the III-III' line in the conductive film of Figure 2.

[Figure 7] Figure 7 shows a schematic view of a mesh pattern (grid pattern) having pattern unit 224 of fine metal wire 222.

[Figure 8] Figure 8 shows a schematic view of a line pattern.

[Figure 9] Figure 9 shows a perspective view for illustrating a method for measuring a sheet resistance.

[Figure 10] Figure 10 shows a partial cross-sectional diagrammatic view of a general conductive film.

[Figure 11] Figure 11 shows a partial cross-sectional diagrammatic view taken along the III-III' line in the conductive film of Figure 2 according to the second embodiment.

Description of Embodiments

Hereinafter, the mode for carrying out the present invention will be described in detail. However, the present invention is not limited by the present embodiment, and various changes or modifications can be made therein without departing from the spirit of the present invention. The upper limit value and the lower limit value in each numeric range in the mode for carrying out the present invention can be arbitrarily combined to constitute an arbitrary numeric range. In the drawings, the structure of each part will be appropriately simplified and shown for the sake of convenience of illustration. The dimension, etc. of each part is not limited to the conditions of the drawings.

<<First embodiment>>

[Transparent heater]

The transparent heater of the first embodiment comprises a conductive film and a connection part to be connected to a power feeding apparatus. The conductive film comprises a transparent substrate and a conductive part comprising a fine metal wire pattern disposed on one side or both sides of the transparent substrate. The fine metal wire pattern in the conductive film is constituted by a fine metal wire. The fine metal wire has voids, and when the cross-sectional area of the fine metal wire is defined as $S_M$ and the total cross-sectional area of the voids included in the cross-section of the fine metal wire is defined as $S_{Vtotal}$ on the cross-section of the fine metal wire perpendicular to the direction of drawing of the fine metal wire, $S_{Vtotal} / S_M$ is 0.10 or more and 0.40 or less.

This transparent heater can provide a transparent heater that is excellent in flexion resistance while having excellent transparency and a low electrical resistance value.

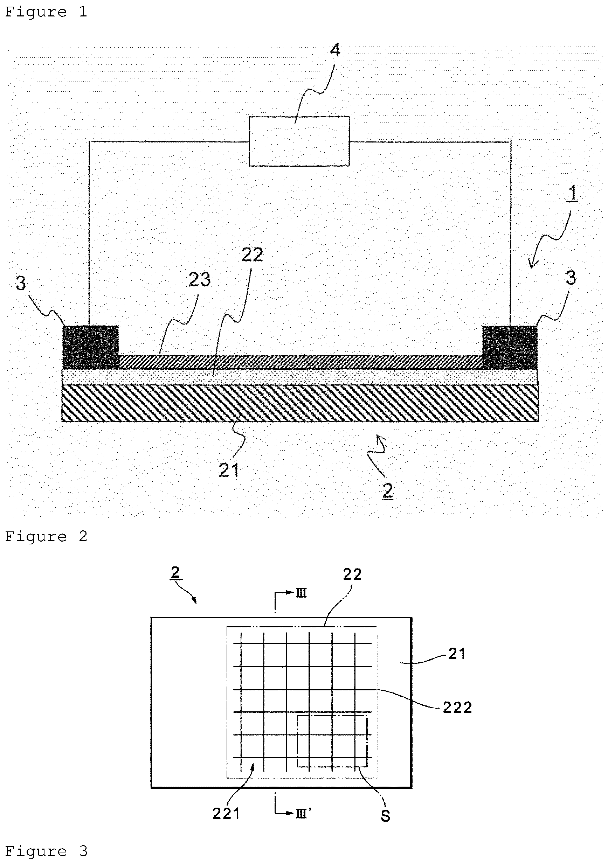

Figure 1 is a conceptual configuration view of the transparent heater according to the first embodiment. Transparent heater 1 of the first embodiment comprises conductive film 2 and connection part 3 connectable to power feeding apparatus 4. The conductive film 2 has transparent substrate 21, conductive part 22 disposed on the transparent substrate 21, and sealing layer 23 formed on the conductive part 22.

The connection part 3 is connected to a fine metal wire constituting a fine metal wire pattern mentioned later. The connection part 3 constitutes at least a portion of a conduction path between the conductive film and the power feeding apparatus which feeds power to the conductive film. In the present embodiment, the connection part 3 is placed at both ends of the conductive film 2. The connection part 3 may be constituted by a conductive layer (metal layer) laminated with the fine metal wire pattern having a predetermined area, as mentioned later, or may be constituted by an assembly of a plurality of lines of the fine metal wire included in the fine metal wire pattern.

The transparent heater 1 according to the first embodiment may comprise power feeding apparatus 4. Current from the power feeding apparatus 4 may be direct current or alternate current and is preferably direct current.

<Conductive film>

The conductive film comprises a transparent substrate and a conductive part comprising a fine metal wire pattern disposed on one side or both sides of the transparent substrate.

Figure 2 is a conceptual top view showing a fine metal wire pattern of a conductive film according to one form of the first embodiment. Fine metal wire pattern 221 in conductive film 2 is a mesh pattern. The conductive film 2 has conductive part 22 comprising the fine metal wire pattern 221 on transparent substrate 21. The fine metal wire pattern 221 is constituted by fine metal wire 222.

The conductive part 22 on the transparent substrate 21 is connected to connection part 3 (not shown). The transparent substrate 21 may have the conductive part 22 on one side or both sides and may have a plurality of conductive parts 22 on one side. The conductive part 22 comprises fine metal wire pattern 221 configured so as to be energizable or chargeable. The conductive film 2 functions as a heating electrode in the transparent heater 1.

[Conductive part]

The conductive part comprises a fine metal wire pattern constituted by a fine metal wire disposed on the transparent substrate. The fine metal wire pattern may be a regular pattern or an irregular pattern. In the first embodiment, the fine metal wire constituting the fine metal wire pattern has voids at a predetermined proportion on the cross-section of the fine metal wire perpendicular to the direction of drawing of the fine metal wire.

The fine metal wire has voids, and when the cross-sectional area of the fine metal wire is defined as $S_M$ and the total cross-sectional area of the voids included in the cross-section of the fine metal wire is defined as $S_{Vtotal}$ on the cross-section of the fine metal wire perpendicular to the direction of drawing of the fine metal wire, $S_{Vtotal} / S_M$ is 0.10 or more and 0.40 or less.

In this context, the line width of the fine metal wire studied in Patent Literature 1 is 10 $\mu$m or larger. The studies of the inventors have revealed that in the case of using a fine metal wire having a line width of 5 $\mu$m or smaller, even if a porous layer as described in Patent Literature 1 is used in order to improve transparency required for conductive films, the porous layer has an insufficient effect of suppressing reduction in conductivity against the breaking or peeling from transparent substrates of fine metal wires ascribable to the deformation, such as bending, deflection, or flexion, of conductive films.

This is presumably because the fine metal wire having a line width of 5 $\mu$m or smaller cannot secure sufficient adhesion of the fine metal wire to a transparent resin substrate, even if configured as described in Patent Literature 1, due to a small amount of conductive ink penetrating the porous layer and a small contact area between the fine metal wire and the transparent resin substrate.

In such a conductive film, as the line width of the fine metal wire gets thinner, the breaking or peeling from the transparent substrate of the fine metal wire becomes marked due to the bending, deflection, flexion, etc. of the conductive film. Even if the fine metal wire is reinforced by covering the fine metal wire with a protective layer or by improving adhesion with an anchor layer, the mechanical characteristics themselves of the fine metal wire are not changed. Hence, such an approach is not capable of completely solving the flexion resistance problems of conductive films having a thin fine metal wire.

By contrast, according to the first embodiment, the fine metal wire itself has a configuration provided with voids serving as a cushion part, thereby adjusting the mechanical characteristics of the fine metal wire itself. This enables the flexibility of the fine metal wire to be secured even if a thinner fine metal wire is used from the viewpoint of visibility. Furthermore, such a fine metal wire having voids in a predetermined range is capable of securing flexion resistance without impairing conductivity.

The conductive film comprising such a fine metal wire, if prepared by printing and applied to a transparent heater, is also excellent from the viewpoint of cost reduction and reduction in environmental load as compared with a conductive film containing ITO, which involves film formation by a vacuum deposition method or a sputtering method.

In the first embodiment, $S_{Vtotal} / S_M$ is 0.10 or more and 0.40 or less, preferably 0.13 or more and 0.37 or less, more preferably 0.15 or more and 0.35 or less, further preferably 0.17 or more and 0.33 or less. $S_{Vtotal} / S_M$ is 0.10 or more, whereby the concentration of stress associated with flexion can be relaxed so that flexibility is further improved. $S_{Vtotal} / S_M$ is 0.40 or less, whereby conductivity is further improved and furthermore, the mechanical strength of the fine metal wire is further improved. $S_{Vtotal}$ and $S_M$ can be calculated from an electron microscope photograph of the cross-section of the fine metal wire perpendicular to the direction of drawing of the fine metal wire.

The uneven distribution and even distribution of the voids within the cross-section of the fine metal wire are not particularly limited. The voids may be substantially evenly distributed throughout the cross-section of the fine metal wire, may be unevenly distributed in the fine metal wire interface, for example, on the transparent substrate side, or may be unevenly distributed on the surface side (side opposite to the transparent substrate side) of the fine metal wire. Among others, the fine metal wire preferably has the voids on the fine metal wire interface on the transparent substrate side. Such a configuration tends to further improve flexibility. The phrase "have the voids on the interface" means that "at least some of the voids are in contact with the transparent substrate" and, in the case of having an intermediate layer mentioned later, means that "at least some of the voids are in contact with the intermediate layer".

This principle is not particularly limited and is based on, for example, the following idea: when two members differing in mechanical properties such as rigidity or drawability, i.e., the transparent substrate and the fine metal wire, are deformed by bending, deflection, flexion, etc., as in the conductive film of the first embodiment, stress is focused on the interface therebetween, thereby causing the breaking or peeling of the fine metal wire. In this case, the presence of the voids on the fine metal wire interface on the transparent substrate side easily relaxes stress and further improves flexion resistance. It is preferred that the voids should be uniformly distributed on the cross-section of the fine metal wire, from the viewpoint of imparting isotropy to the flexion resistance of the fine metal wire. From both of these viewpoints, a form is preferred in which the fine metal wire has the voids on the fine metal wire interface on the transparent substrate side while some of the voids are distributed within the cross-section of the fine metal wire.

The uneven distribution and the even distribution can be represented by the cross-sectional area of the voids in a specific thickness region. For example, when the cross-sectional area of the voids in a thickness region from the fine metal wire interface to 0.2T on the transparent substrate side is defined as $S_{V0.2}$, $S_{V0.2} / S_{Vtotal}$ serves as an indicator that indicates the proportion of the voids present in a region on the interface side of the fine metal wire on the transparent substrate side. Such $S_{V0.2} / S_{Vtotal}$ is preferably 0.15 or more and 0.60 or less, more preferably 0.18 or more and 0.55 or less, further preferably 0.20 or more and 0.50 or less. $S_{V0.2} / S_{Vtotal}$ is 0.15 or more, whereby stress on the fine metal wire interface on the transparent substrate side is more likely to be relaxed so that flexibility tends to be further improved. $S_{V0.2} / S_{Vtotal}$ is 0.60 or less, whereby a large contact area between the transparent substrate and the fine metal wire further improves adhesion while a relatively large proportion of the voids present in other regions tends to further improve isotropic flexion resistance. In the first embodiment, T denotes the maximum thickness among thicknesses from the fine metal wire interface on the transparent substrate side to the fine metal wire surface and can be measured from an electron microscope photograph.

When the cross-sectional area of the voids in a thickness region from the fine metal wire interface to 0.8T on the transparent substrate side is defined as $S_{V0.8}$, $S_{V0.8} / S_{Vtotal}$ serves as an indicator that indicates the proportion of the voids present in regions other than the surface side of the fine metal wire. Such $S_{V0.8} / S_{Vtotal}$ is preferably 0.80 or more and 1.00 or less. The lower limit value is more preferably 0.85 or more, further preferably 0.90 or more. $S_{V0.8} / S_{Vtotal}$ is 0.80 or more, whereby stress on the fine metal wire interface on the transparent substrate side is more likely to be relaxed so that flexion resistance tends to be further improved. Also, conductivity tends to be improved.

As described above, $S_{Vtotal} / S_M$ and preferably further $S_{V0.2} / S_{Vtotal}$ and $S_{V0.8} / S_{Vtotal}$ can be adjusted to specific ranges, thereby suppressing the breaking or peeling from a transparent substrate of the fine metal wire ascribable to the deformation, such as bending, deflection, or flexion, of the conductive film, and improving flexion resistance while maintaining excellent transparency and high conductivity.

$(S_{V0.2} + S_{V0.8}) / S_{Vtotal}$ is an indicator that indicates the degree of uneven distribution of the voids on the interface side (thickness region from the fine metal wire interface to 0.2T) of the fine metal wire with respect to the surface side (thickness region from 0.8T to T) of the fine metal wire. The presence of the voids on the interface side of the fine metal wire, i.e., in a thickness region from the fine metal wire interface to 0.2T, and $(S_{V0.2} + S_{V0.8}) / S_{Vtotal}$ of more than 1.00 indicate that the voids are more unevenly distributed on the interface side than the surface side of the fine metal wire. $(S_{V0.2} + S_{V0.8}) / S_{Vtotal}$ is preferably more than 1.00 and 1.60 or less, more preferably 1.10 or more and 1.55 or less, further preferably 1.15 or more and 1.50 or less. When $(S_{V0.2} + S_{V0.8}) / S_{Vtotal}$ is more than 1.00, stress on the fine metal wire interface is more likely to be relaxed so that flexion resistance tends to be further improved because the voids are unevenly distributed on the interface side of the fine metal wire. When $(S_{V0.2} + S_{V0.8}) / S_{Vtotal}$ is 1.60 or less, a relatively large proportion of the voids present in regions other than the interface tends to further improve isotropic flexion resistance. The maximum value of $(S_{V0.2} + S_{V0.8}) / S_{Vtotal}$ is 2.00, at which all the voids exist in a thickness region from the fine metal wire interface to 0.2T on the transparent substrate side.

Increase or decrease in each value of $S_{Vtotal} / S_M$, $S_{V0.2} / S_{Vtotal}$, $S_{V0.8} / S_{Vtotal}$, and $(S_{V0.2} + S_{V0.8}) / S_{Vtotal}$ is not particularly limited and can be controlled, for example, by adjusting sintering conditions for forming the fine metal wire. The fine metal wire can be formed by forming a pattern using ink containing a metal component on the transparent substrate, and sintering the pattern for the binding of the metal components to another. In this sintering step, the metal component is considered to form a metal component sintered film by fusion to an adjacent metal component while diffused and aggregated. Hence, the diffusion and aggregation of the metal component are adjusted by adjusting an energy at the time of sintering (e.g., heat, plasma, electron beam, and irradiation energy of a light source) or a sintering time. This can adjust the amount of the voids in the fine metal wire. The amount of the voids in the fine metal wire may also be adjusted by adjusting the type or content of a surfactant, a dispersant, or a reducing agent contained in the ink, and generating their decomposed gases during sintering.

In the present specification, $S_{Vtotal} / S_M$, $S_{V0.2} / S_{Vtotal}$, $S_{V0.8} / S_{Vtotal}$, and $(S_{V0.2} + S_{V0.8}) / S_{Vtotal}$ can be calculated from an electron microscope photograph of the cross-section of the fine metal wire perpendicular to the direction of drawing of the fine metal wire. Hereinafter, specific measurement methods will be described. The formation of the cross-section of the fine metal wire or SEM observation mentioned later is preferably performed in an inert atmosphere of argon or the like or in vacuum from the viewpoint of preventing the oxidation or contamination of the fine metal wire cross-section.

First, the conductive film is cut to obtain a measurement sample including the cross-section of the fine metal wire perpendicular to the direction of drawing of the fine metal wire. The method for preparing the measurement sample is not particularly limited as long as the method can suppress damage (deformation) on the fine metal wire cross-section ascribable to the formation or processing of the cross-section. Preferably, a processing method using ion beam (e.g., BIB (broad ion beam) and FIB (focused ion beam) processing methods), precision machine polishing, an ultramicrotome, or the like can be used. Particularly, a BIB processing method using argon ion beam is preferably used from the viewpoint of suppressing damage on the fine metal wire cross-section. In the first embodiment and Examples, a BIB processing method is used.

Hereinafter, the method for forming the cross-section of the fine metal wire by use of the BIB processing method will be described. First, the conductive film is cut perpendicularly to the direction of drawing of the fine metal wire to obtain a sample having an exposed cross-section to be observed. In this operation, the cross-section of the sample might have undergone slight deformation due to the cutting process. Accordingly, in the BIB processing method, this cross-section that might have undergone slight deformation is trimmed with broad ion beam to obtain a fine cross-section without deformation. Specifically, first, a shielding plate is closely attached to the surface of the transparent substrate on the side where no conductive part is formed, of the sample. In this operation, the shielding plate is closely attached to the sample so as to expose a portion to be trimmed with broad ion beam and so as not to expose other portions. Subsequently, the sample is irradiated with broad ion beam from above the shielding plate. The exposed portion (cross-section that might have undergone deformation) is thereby trimmed with broad ion beam to obtain a measurement sample having a cross-section without deformation. The irradiation with broad ion beam from the transparent substrate side can produce a finer cross-section of the fine metal wire as compared with irradiation with broad ion beam from the conductive part side.

Alternatively, the conductive film may be cut directly with broad ion beam when cut perpendicularly to the direction of drawing of the fine metal wire. In this case, the shielding plate is closely attached to the side of the transparent substrate where no conductive part is formed in the conductive film. The sample is irradiated with broad ion beam from above the shielding plate.

The measurement sample thus obtained is observed under SEM to obtain an SEM image of the cross-section of the fine metal wire. $S_M$, $S_{Vtotal}$, $S_{V0.2}$, and $S_{V0.8}$ are each calculated from the obtained SEM image, and $S_{Vtotal} / S_M$, $S_{V0.2} / S_{Vtotal}$, $S_{V0.8} / S_{Vtotal}$, and $(S_{V0.2} + S_{V0.8}) / S_{Vtotal}$ can be calculated. The cross-sectional area $S_M$ of the fine metal wire is a total cross-sectional area including the structure and the voids of the fine metal wire cross-section mentioned above.

For the calculation of $S_{Vtotal}$ / $S_M$, $S_{V0.2}$ / $S_{Vtotal}$, $S_{V0.8}$ / $S_{Vtotal}$, and ($S_{V0.2}$ + $S_{V0.8}$) / $S_{Vtotal}$, image processing software known in the art, such as IP-1000 manufactured by Asahi Kasei Corp. (software name: A-zo Kun) or ImageJ, may be supplementarily used. In the present embodiment and Examples, ImageJ was used.

The fine metal wire preferably has, for example, but not particularly limited to, a conductive component containing at least one or more metal elements selected from the group consisting of gold, silver, copper, and aluminum. Particularly, the conductive component is preferably composed mainly of silver or copper from the viewpoint of cost and conductivity and more preferably composed mainly of copper from the viewpoint of cost. The conductive component contained in the fine metal wire is preferably a reduced form of a metal oxide contained in ink. Use of the reduced form of the metal oxide facilitates closely attaching the fine metal wire to other layers such as a substrate. More specifically, it is preferred to use a copper oxide, i.e., reduced copper, from the viewpoint of further enhancing conductivity. In the first embodiment, the phrase "composed mainly of" means being composed of 50% by mass or more of the component based on the total amount of the fine metal wire.

The fine metal wire may comprise a non-conductive component in addition to the conductive component. Examples of the non-conductive component include, but are not particularly limited to, metal oxides, metal compounds, and organic compounds. Examples of these non-conductive components include metal oxides, metal compounds, and organic compounds that are components derived from components contained in ink mentioned later and remain in the fine metal wire after sintering among the components contained in ink. The content ratio of the conductive component is preferably 50% by mass or more, more preferably 60% by mass or more, further preferably 70% by mass or more. The upper limit of the content ratio of the conductive component is not particularly limited and is 100% by mass. The content ratio of the non-conductive component is preferably 50% by mass or less, more preferably 40% by mass or less, further preferably 30% by mass or less. The lower limit of the content ratio of the non-conductive component is not particularly limited and is 0% by mass.

The non-conductive component contained in the fine metal wire is not particularly limited and is preferably a metal oxide or a metal compound derived from a component contained in ink. The fine metal wire containing such a metal oxide or a metal compound undergoes decrease in volume in the thickness direction from the fine metal wire surface inside the fine wire when the non-conductive component is converted to a conductive metal through chemical reaction such as reduction reaction in a sintering step. The decrease in volume exerts the uneven distribution of the voids inside the fine metal wire.

The substrate on which the fine metal wire is formed is preferably flat. A large area ratio of a fine metal wire interface contacted with air excellent in heat insulating properties causes a high internal temperature of the fine metal wire in a sintering step and rapid progression of the chemical reaction and facilitates exerting the uneven distribution of voids. The prior literature (Japanese Patent Laid-Open No. 2016-139688) describes a method for forming a fine metal wire by forming a concave-convex shape on substrate surface using a thermosetting resin or a light curable resin, and filling the concave parts with metal ink. In this structure, heat generated in the fine metal wire in a sintering step escapes via the resin, thereby delaying the progression of reduction reaction or chemical reaction, and making it difficult to exert the uneven distribution of voids.

(Fine metal wire pattern)

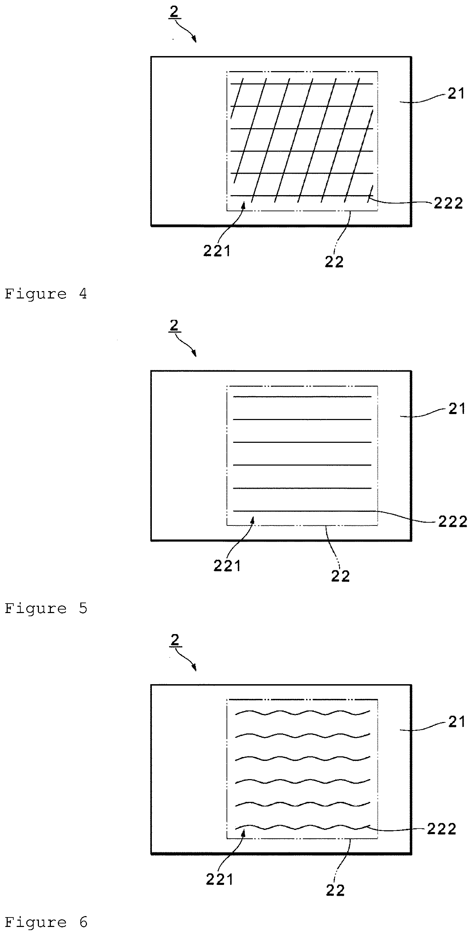

Each of Figures 3 to 5 is a conceptual top view showing a fine metal wire pattern of a conductive film according to an alternative form of the first embodiment. The fine metal wire pattern can be designed according to the purpose of an intended electronic device. Examples thereof include, but are not particularly limited to, a mesh pattern (Figures 2 and 3) formed by a plurality of lines of the fine metal wire intersecting in a net-like form, and a line pattern (Figures 4 and 5) formed by a plurality of substantially parallel lines of the fine metal wire. Alternatively, the fine metal wire pattern may be a combination of the mesh pattern and the line pattern. The mesh of the mesh pattern may have a square or rectangular shape as shown in Figure 2 or may have a polygonal shape such as a rhombus as shown in Figure 3. The fine metal wire constituting the line pattern may be a straight line as shown in Figure 4 or may be a curved line as shown in Figure 5. The fine metal wire constituting the mesh pattern can also be a curved line.

Figure 6 is a partial cross-sectional diagrammatic view taken along the III-III' line in the conductive film of Figure 2. Line width W of the fine metal wire of the first embodiment refers to the line width of the fine metal wire 222 when the fine metal wire 222 is projected onto the surface of the transparent substrate 21 from the side where the fine metal wire pattern 221 is disposed, of the transparent substrate 21. Referring to this conductive film shown in Figure 6, the line width W of fine metal wire 222 having a trapezoidal cross-section is the width of the fine metal wire 222 interface on the transparent substrate 21 side. The maximum thickness T (hereinafter, also simply referred to as "thickness T") of the fine metal wire means the maximum thickness when surface roughness is taken into consideration. When thickness measurement is difficult due to a non-flat interface, T is regarded as the distance from a point at the intersection between a straight line joining two points at both ends of the interface and its perpendicular bisector to a point at the intersection between the perpendicular bisector and the outer surface of the fine metal wire.

In Figure 6, 0.20T means a position at a distance of 0.20 × thickness T in the perpendicular direction from the fine metal wire 222 interface on the transparent substrate 21 side. 0.50T means a position at a distance of 0.50 × thickness T in the perpendicular direction from the fine metal wire 222 interface on the transparent substrate 21 side. 0.80T means a position at a distance of 0.80 × thickness T in the perpendicular direction from the fine metal wire 222 interface on the transparent substrate 21 side. Pitch P means the sum of the line width W and the distance between lines of the fine metal wire.

(Line width W)

The line width W of the fine metal wire is preferably 0.1 $\mu$m or larger and 5.0 $\mu$m or smaller, more preferably 0.5 $\mu$m or larger and 4.5 $\mu$m or smaller, further preferably 1.0 $\mu$m or larger and 4.0 $\mu$m or smaller, still further preferably 1.5 $\mu$m or larger and 3.5 $\mu$m or smaller. The line width W of the fine metal wire is 0.1 $\mu$m or larger, whereby conductivity tends to be further improved. Furthermore, reduction in conductivity ascribable to the oxidation, corrosion, or the like of the fine metal wire surface tends to be able to be sufficiently suppressed. A thinner line width of the fine metal wire permits increase in the number of lines of the fine metal wire at the same opening ratio. This attains more uniform electrical field distribution of the conductive film and enables a higher-resolution electronic device to be prepared. If some lines of the fine metal wire are broken, this influence can be compensated for by the other lines of the fine metal wire. On the other hand, the line width W of the fine metal wire is 5.0 $\mu$m or smaller, whereby the visibility of the fine metal wire is further reduced. Thus, the transparency of the conductive film tends to be further improved.

The thickness T of the fine metal wire is preferably 10 nm or larger and 1,000 nm or smaller. The lower limit of the thickness T is more preferably 50 nm or larger, further preferably 75 nm or larger. The thickness T of the fine metal wire is 10 nm or larger, whereby conductivity tends to be further improved. Reduction in conductivity ascribable to the oxidation, corrosion, or the like of the fine metal wire surface tends to be able to be sufficiently suppressed. On the other hand, the thickness T of the fine metal wire is 1,000 nm or smaller, whereby high transparency can be exerted in a wide view angle.

(Aspect ratio)

The aspect ratio (W/T) represented by the thickness T of the fine metal wire to the line width W of the fine metal wire is preferably 0.05 or more and 1.00 or less. The lower limit of the aspect ratio is more preferably 0.08 or more, further preferably 0.10 or more. The aspect ratio is 0.05 or more, whereby conductivity tends to be able to be further improved without reducing transmittances.

(Pitch)

The pitch P of the fine metal wire pattern is preferably 5 $\mu$m or larger, more preferably 50 $\mu$m or larger, further preferably 100 $\mu$m or larger. The pitch P of the fine metal wire pattern is 5 $\mu$m or larger, whereby a favorable transmittance can be obtained. The pitch P of the fine metal wire pattern is preferably 1,000 $\mu$m or smaller, more preferably 500 $\mu$m or smaller, further preferably 250 $\mu$m or smaller. The pitch P of the fine metal wire pattern is 1,000 $\mu$m or smaller, whereby conductivity tends to be able to be further improved. When the shape of the fine metal wire pattern is a mesh pattern, an opening ratio of 99% can be attained by setting the pitch of a fine metal wire pattern having a line width of 1 $\mu$m to 200 $\mu$m.

The line width, aspect ratio, and pitch of the fine metal wire pattern can be confirmed by observing the conductive film cross-section under an electron microscope or the like. The line width and pitch of the fine metal wire pattern can also be observed under a laser microscope or an optical microscope. Since the pitch and the opening ratio have a relational expression mentioned later, one of these factors can be calculated if the other factor is known. Examples of the method for adjusting the line width, aspect ratio, and pitch of the fine metal wire pattern to the desired ranges include a method of adjusting grooves of a plate for use in a method for producing the conductive film mentioned later, and a method of adjusting the average particle size of metal particles in ink.

(Opening ratio)

The lower limit value of the opening ratio of the fine metal wire pattern is preferably 60% or more, more preferably 70% or more, further preferably 80% or more, particularly preferably 90% or more. The opening ratio of the fine metal wire pattern is equal to or more than the specific value mentioned above, whereby the transmittance of the conductive film tends to be further improved. The upper limit value of the opening ratio of the fine metal wire pattern is preferably less than 100%, more preferably 95% or less, further preferably 90% or less, still further preferably 80% or less, even further preferably 70% or less, particularly preferably 60% or less. The opening ratio of the fine metal wire pattern is equal to or less than the specific value mentioned above, whereby the conductivity of the conductive film tends to be further improved. The opening ratio of the fine metal wire pattern also differs in appropriate value depending on the shape of the fine metal wire pattern. The upper limit value and lower limit value of the opening ratio of the fine metal wire pattern can be appropriately combined according to the required performance (transmittance and sheet resistance) of an intended electronic device.

The "opening ratio of the fine metal wire pattern" can be calculated according to an expression given below as to a region where the fine metal wire pattern is formed on the transparent substrate. The region where the fine metal wire pattern is formed on the transparent substrate is, for example, a range represented by S in Figure 2 and excludes a marginal part and the like where the fine metal wire pattern is not formed.

```
Opening ratio

= (1 - Area occupied by the fine metal wire pattern /

Area of the transparent substrate) × 100
```

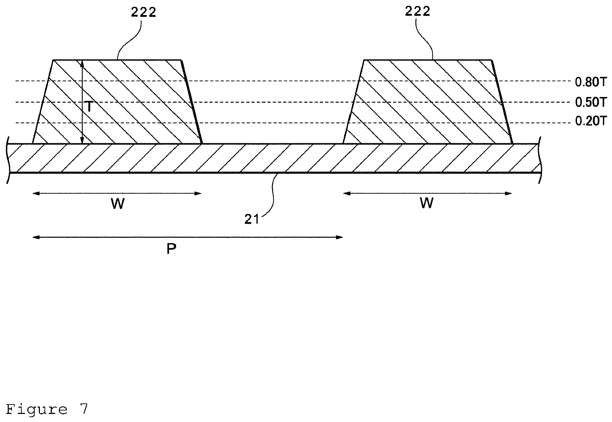

Figure 7 is a schematic view of a mesh pattern (grid pattern) having pattern unit 224 of fine metal wire 222. The relational expression of the opening ratio and the pitch differs depending on the shape of the fine metal wire pattern. Their relationship can be calculated as given below. In the case of this mesh pattern, the opening ratio and the pitch have the following relational expression:

```
Opening ratio = {Area of opening part 225 / Area of

pattern unit 224} × 100

        = {((Pitch P1 - Line width W1) × (Pitch P2 - Line

width W2)) / (Pitch P1 × Pitch P2)} × 100
```

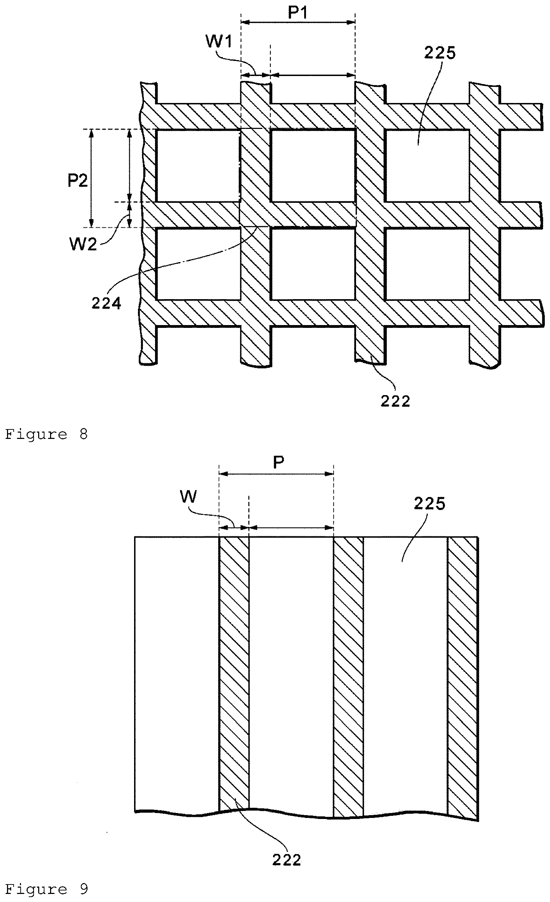

Figure 8 is a schematic view of a line pattern. In the case of this line pattern, the opening ratio and the pitch have the following relational expression:

```
Opening ratio = {(Pitch P - Line width W) / Pitch P} ×

100
```

[Transparent substrate]

The term "transparent" of the transparent substrate means that the visible light transmittance is preferably 80% or more, more preferably 90% or more, further preferably 95% or more. In this context, the visible light transmittance can be measured in accordance with JIS K 7361-1: 1997.

Examples of the material of the transparent substrate include, but are not particularly limited to: transparent inorganic substrates such as glass; and transparent organic substrates such as acrylic acid ester, methacrylic acid ester, polyethylene terephthalate, polybutylene terephthalate, polyethylene naphthalate, polycarbonate, polyarylate, polyvinyl chloride, polyethylene, polypropylene, polystyrene, nylon, aromatic polyamide, polyether ether ketone, polysulfone, polyethersulfone, polyimide, and polyetherimide. Among them, polyethylene terephthalate, polyimide, or polyethylene naphthalate is preferred. Use of polyethylene terephthalate attains better productivity (cost reduction effect) for producing the conductive film and tends to further improve the adhesion of the transparent substrate to the fine metal wire. Use of polyimide tends to further improve the heat resistance of the conductive film. Use of polyethylene naphthalate tends to attain better adhesion of the transparent substrate to the fine metal wire.

The transparent substrate may be made of one material or may be made of two or more materials laminated with each other. When the transparent substrate is multi-layered such that two or more materials are laminated with each other, the transparent substrate may be made of organic substrates or inorganic substrates laminated with each other or may be made of an organic substrate(s) and an inorganic substrate(s) laminated with each other.

The thickness of the transparent substrate is preferably 5 $\mu$m or larger and 500 $\mu$m or smaller, more preferably 10 $\mu$m or larger and 100 $\mu$m or smaller.

[Intermediate layer]

The conductive film of the first embodiment may have an intermediate layer between the transparent substrate and the conductive part. The intermediate layer is capable of contributing to improvement in the adhesion between the transparent substrate and the fine metal wire of the conductive part.

Examples of the component contained in the intermediate layer include, but are not particularly limited to: silicon compounds such as (poly)silanes, (poly)silazanes, (poly)silthianes, (poly)siloxanes, silicon, silicon carbide, silicon oxide, silicon nitride, silicon chloride, silicate, zeolite, and silicide; aluminum compounds such as aluminum oxide; and magnesium compounds such as magnesium fluoride. Among them, at least one member selected from the group consisting of silicon oxide, silicon nitride, aluminum oxide, and magnesium fluoride is preferred. Use of such a component tends to further improve the transparency and durability of the conductive film and attains better productivity (cost reduction effect) for producing the conductive film. The intermediate layer can be prepared by a vapor deposition such as PVD or CVD, or a film formation method of applying and drying an intermediate-forming composition containing the component for the intermediate layer dispersed in a dispersion medium. The intermediate-forming composition may contain, if necessary, a dispersant, a surfactant, a binder, or the like.

The thickness of the intermediate layer is preferably 0.01 $\mu$m or larger and 500 $\mu$m or smaller, more preferably 0.05 $\mu$m or larger and 300 $\mu$m or smaller, further preferably 0.10 $\mu$m or larger and 200 $\mu$m or smaller. The thickness of the intermediate layer is 0.01 $\mu$m or larger, whereby the adhesion of the intermediate layer to the fine metal wire is exerted. The thickness of the intermediate layer is 500 $\mu$m or smaller, whereby the flexibility of the transparent substrate can be ensured.

The intermediate layer laminated on the transparent substrate can prevent plasma or the like from etching the transparent substrate at a site uncovered with the fine metal wire pattern part when a metal component in ink is sintered by a sintering approach such as plasma.

This intermediate layer preferably further has an antistatic function in order to prevent the breaking of the fine metal wire pattern ascribable to static electricity. For the intermediate layer having an antistatic function, it is preferred that the intermediate layer should comprise at least any of a conductive inorganic oxide and a conductive organic compound. Examples of the conductive organic compound include conductive organosilane compounds, aliphatic conjugated polyacetylene, aromatic conjugated poly(p-phenylene), and heterocyclic conjugated polypyrrole. Among them, a conductive organosilane compound is preferred.

The volume resistivity of the intermediate layer is preferably 100 $\Omega$cm or more and 100000 $\Omega$cm or less, more preferably 1000 $\Omega$cm or more and 10000 $\Omega$cm or less, still more preferably 2000 $\Omega$cm or more and 8000 $\Omega$cm or less. The volume resistivity of the intermediate layer is 100000 $\Omega$cm or less, whereby an antistatic function is exerted. The volume resistivity of the intermediate layer is 100 $\Omega$cm or more, whereby the resulting conductive film can be suitably used for purposes such as touch panels for which electrical conduction between fine metal wire patterns is undesirable. The volume resistivity can be adjusted by the content of the component, such as the conductive inorganic oxide or the conductive organic compound, which exerts an antistatic function, in the intermediate layer. When the intermediate layer comprises, for example, highly plasma-resistant silicon oxide (volume specific resistance: $10^{14}$ $\Omega \cdot$cm or more) and an organosilane compound as the conductive organic compound, the volume resistivity can be reduced by increasing the content of the conductive organosilane compound. On the other hand, the volume resistivity is increased by increasing the content of the silicon oxide. Because of the high plasma resistance, a thin film can be formed without impairing optical characteristics.

[Sealing layer]

The conductive film of the first embodiment may be provided with a sealing layer covering the conductive part. The sealing layer may cover only the fine metal wire constituting the conductive part or may cover the surface of the fine metal wire and the transparent substrate (or the intermediate layer).

The material of the sealing layer is not particularly limited as long as the material has translucency and can exert favorable adhesion to the fine metal wire or the transparent substrate (or the intermediate layer). For example, a thermosetting resin such as phenol resin, thermosetting epoxy resin, thermosetting polyimide, melamine resin, urea resin, unsaturated polyester resin, alkyd resin, polyurethane, diallyl phthalate resin, or silicone resin, a UV curable resin such as urethane acrylate, acrylic resin acrylate, epoxy acrylate, silicone acrylate, or UV curable epoxy resin, or a commercially available coating agent can be used.

The thickness of the sealing layer is preferably 0.01 $\mu$m or larger and 1.00 $\mu$m or smaller, more preferably 0.03 $\mu$m or larger and 0.80 $\mu$m or smaller, further preferably 0.05 $\mu$m or larger and 0.50 $\mu$m or smaller. The thickness of the sealing layer 23 is 0.01 μm or larger, whereby the fine metal wire 222 protected with the sealing layer 23 can be prevented from being oxidized. The thickness of the sealing layer 23 is 1.00 μm or smaller, whereby the transparency of the conductive film can be improved.

[Other physical properties of conductive film]

(Sheet resistance)

The sheet resistance of the conductive film is preferably 0.1 Ω/sq or more and 50 Ω/sq or less, more preferably 0.1 Ω/sq or more and 40 Ω/sq or less, further preferably 0.1 Ω/sq or more and 30 Ω/sq or less, still further preferably 0.1 Ω/sq or more and 20 Ω/sq or less, even further preferably 0.1 Ω/sq or more and 10 Ω/sq or less. When the sheet resistance is 50 Ω/sq or less, a heater having a high achievable temperature is obtained because of high current that flows in a sheet. A lower sheet resistance tends to suppress power loss. Hence, the achievable temperature of the heater can be elevated by using the conductive film having a low sheet resistance. The sheet resistance of the conductive film can be measured by a method given below.

Figure 9 is a perspective view for illustrating the method for measuring the sheet resistance. First, a rectangular portion throughout which the fine metal wire pattern is disposed is cut out of the conductive film to obtain a measurement sample. Current collector parts for sheet resistance measurement electrically connected to the fine metal wire pattern are formed at both ends of the obtained measurement sample. Electrical resistance R (Ω) between the current collector parts is measured. Sheet resistance $R_s$ (Ω/sq) can be calculated according to the following expression from the obtained electrical resistance R (Ω), distance L (mm) between the current collector parts of the measurement sample, and length D (mm) in the depth direction.

$$R_s = R / L \times D$$

The sheet resistance of the conductive film tends to be reduced with increase in the aspect ratio (thickness) of the fine metal wire. The sheet resistance may be adjusted by selecting the type of the metal material constituting the fine metal wire. A lower sheet resistance tends to improve heat generation efficiency.

(Visible light transmittance)

The visible light transmittance of the conductive film is preferably 80% or more and 100% or less, more preferably 85% or more and 100% or less. In this context, the visible light transmittance can be measured in accordance with JIS K 7361-1: 1997 for total light transmittance by calculating the transmittance in a range of the visible light (360 to 830 nm).
The visible light transmittance of the conductive film tends to be further improved by decreasing the line width of the fine metal wire pattern or by improving the opening ratio thereof.

(Haze)

The haze of the conductive film is preferably 0.01% or more and 5.00% or less. The upper limit of the haze is more preferably 4.00% or less, further preferably 3.00% or less. When the upper limit of the haze is 5.00% or less, the cloudiness of the conductive film to visible light can be sufficiently reduced. The haze described herein can be measured in accordance with JIS K 7136: 2000 for haze.

[Method for producing conductive film]

Examples of the method for producing the conductive film include, but are not particularly limited to, a method having a pattern formation step of forming a pattern on a transparent substrate using ink containing a metal component, and a sintering step of sintering the pattern to form a fine metal wire. The method for producing the conductive film of the first embodiment may also comprise an intermediate layer formation step of forming an intermediate layer on the surface of the transparent substrate, prior to the pattern formation step.

(Intermediate layer formation step)

The intermediate layer formation step is the step of forming an intermediate layer on the surface of the transparent substrate. Examples of the method for forming the intermediate layer include, but are not particularly limited to: a method of forming a vapor-deposited film on the transparent substrate surface by a vapor deposition method such as physical vapor deposition (PVD) or chemical vapor deposition (CVD); a method of forming a coating film by applying a composition for intermediate layer formation onto the transparent substrate surface, followed by drying.

The composition for intermediate layer formation contains any of the components listed as examples of the component contained in the intermediate layer, or a precursor thereof, and a solvent and may contain, if necessary, a surfactant, a dispersant, a binder, or the like.

(Pattern formation step)

The pattern formation step is the step of forming a pattern using ink containing a metal component. The pattern formation step is not particularly limited as long as the step is performed by a plate printing method using a plate having grooves of the desired fine metal wire pattern. Such a method has, for example, the steps of: coating transfer medium surface with ink; allowing the transfer medium surface coated with ink to face the relief part surface of a relief printing plate, and pressing and contacting these surfaces to transfer the ink on the transfer medium surface onto the relief part surface of the relief printing plate; and allowing the transfer medium surface coated with ink to face the surface of the transparent substrate, and pressing and contacting these surfaces to transfer the ink remaining on the transfer medium surface to the surface of the transparent substrate. When the intermediate layer is formed on the transparent substrate, the ink is transferred to the intermediate layer surface.

<<Ink>>

The ink for use in the pattern formation step contains a metal component, and a solvent and may contain, if necessary, a surfactant, a dispersant, a reducing agent, or the like. The metal component may be contained as metal particles in the ink or may be contained as a metal complex in the ink. In this context, examples of the metal element species contained in the metal component include, but are not particularly limited to, gold, silver, copper, and aluminum. Among them, silver or copper is preferred, and copper is more preferred.

In the case of using metal particles, their average primary particle size is preferably 100 nm or smaller, more preferably 50 nm or smaller, further preferably 30 nm or smaller. The lower limit of the average primary particle size of the metal particles is not particularly limited and is, for example, 1 nm or larger. The average primary particle size of the metal particles is 100 nm or smaller, whereby the line width W of the resulting fine metal wire can be further thinned. In the first embodiment, the "average primary particle size" refers to the particle size of each individual metal particle (so-called primary particle) and is distinguished from an average secondary particle size which is the particle size of an aggregate (so-called secondary particle) formed by a plurality of metal particles together.

The metal particles may be in the form of a metal oxide such as copper oxide, a metal compound, or core/shell particles having copper in the core part and copper oxide in the shell part. The form of the metal particles can be appropriately determined from the viewpoint of dispersibility and sinterability.

The content of the metal particles in the ink is preferably 1% by mass or more and 40% by mass or less, more preferably 5% by mass or more and 35% by mass or less, further preferably 10% by mass or more and 35% by mass or less, based on the total mass of the ink composition. When the content of the metal particles in the ink is 1% by mass or more based on the total mass of the ink composition, a fine metal wire pattern having conductivity can be obtained. When the content is 40% by mass or less, the ink can be printed in the fine metal wire pattern.

When the metal component in the ink for use in the pattern formation is in the form of a metal oxide, a component containing oxygen is generated during a process of converting the metal oxide to a metal in a sintering step mentioned later and decrease in volume occurs in the thickness direction during distillation. This facilitates forming voids inside the resulting fine metal wire and further facilitates exerting the uneven distribution of the voids, which is preferable. This approach, particularly, combined with a sintering method with plasma mentioned later is particularly preferred because the voids become easy to unevenly distribute on the transparent substrate side in the configuration of the present invention.

Examples of the surfactant include, but are not particularly limited to, silicone surfactants and fluorine surfactants. Use of such a surfactant improves the coatability of a transfer medium (blanket) with the ink and the smoothness of the ink used in coating and tends to produce a more uniform coating film. The surfactant is preferably configured so as to permit dispersion of the metal component and to be less likely to remain in sintering.

The content of the surfactant in the ink is preferably 0.01% by mass or more and 10% by mass or less, more preferably 0.1% by mass or more and 5% by mass or less, further preferably 0.5% by mass or more and 2% by mass or less, based on the total mass of the ink composition. When the content of the surfactant in the ink is 0.01% by mass or more based on the total mass of the ink composition, coatability with the ink and the smoothness of the ink used in coating can be improved. When the content is 10% by mass or less, a low resistant fine metal wire pattern can be obtained.

Examples of the dispersant include, but are not particularly limited to, a dispersant that noncovalently binds to or interacts with the metal component, and a dispersant that covalently binds to the metal component. Examples of the functional group for noncovalent binding or interaction include dispersants having a phosphoric acid group. Use of such a dispersant tends to further improve the dispersibility of the metal component.

The content of the dispersant in the ink is preferably 0.1% by mass or more and 30% by mass or less, more preferably 1% by mass or more and 20% by mass or less, further preferably 2% by mass or more and 10% by mass or less, based on the total mass of the ink composition. When the content of the dispersant in the ink is 0.1% by mass or more based on the total mass of the ink composition, ink containing the metal particles dispersed therein can be obtained. When the content is 30% by mass or less, a low resistant fine metal wire pattern can be obtained.

Examples of the solvent include: alcohol solvents such as monoalcohols and polyalcohols; alkyl ether solvents; hydrocarbon solvents; ketone solvents; and ester solvents. These solvents may be used singly, or one or more thereof may be used in combination. For example, a monoalcohol having 10 or less carbon atoms and a polyalcohol having 10 or less carbon atoms are used in combination. Use of such a solvent tends to further improve the coatability of a transfer medium (blanket) with the ink, the transferability of the ink from a transfer medium to a relief printing plate, the transferability of the ink from the transfer medium to the transparent substrate, and the dispersibility of the metal component. The solvent is preferably configured so as to permit dispersion of the metal component and to be less likely to remain in sintering.

The content of the solvent in the ink is a balance of the components such as the metal particles, the surfactant, and the dispersant mentioned above and is, for example, preferably 50% by mass or more and 99% by mass or less, more preferably 60% by mass or more and 90% by mass or less, further preferably 70% by mass or more and 80% by mass or less, based on the total mass of the ink composition. When the content of the solvent in the ink is 50% by mass or more based on the total mass of the ink composition, the ink can be printed in the fine metal wire pattern. When the content is 99% by mass or less, a fine metal wire pattern having conductivity can be obtained.

The contents of the components described above contained in the ink can be appropriately adjusted from the viewpoint of adjusting the amount of the voids in the fine metal wire by generating their decomposed gases or the like during sintering.

(Sintering step)

The sintering step is the step of sintering a pattern to form a fine metal wire. This can produce a conductive part having the same fine metal wire pattern as the pattern obtained by the application of the ink. The sintering is not particularly limited as long as the method therefor can form a metal component sintered film by the fusion of the metal component. The sintering may be performed in, for example, a sintering furnace, or may be performed using plasma, a heating catalyst, ultraviolet ray, vacuum ultraviolet ray, electron beam, infrared lamp annealing, flash lamp annealing, laser, or the like. If the resulting sintered film is easily oxidized, the sintering is preferably performed in a non-oxidative atmosphere. If the metal oxide or the like is difficult to reduce with only the reducing agent that may be contained in the ink, the sintering is preferably performed in a reductive atmosphere.

The non-oxidative atmosphere is an atmosphere free from an oxidative gas such as oxygen and includes an inert atmosphere and a reductive atmosphere. The inert atmosphere is an atmosphere filled with an inert gas, for example, argon, helium, neon, or nitrogen. The reductive atmosphere refers to an atmosphere where a reductive gas such as hydrogen or carbon monoxide exists. A sintering furnace may be filled with such a gas, and the ink-coated film (dispersion-coated film) can be sintered in a closed system. Alternatively, the coated film may be sintered in the circulated system of a sintering furnace where such a gas is allowed to flow. In the case of sintering the coated film in a non-oxidative atmosphere, it is preferred that the sintering furnace should be temporarily vacuumized so that oxygen in the sintering furnace is removed and replaced with a non-oxidative gas. The sintering may be performed in a pressurized atmosphere or may be performed in a reduced pressure atmosphere.

The sintering temperature is not particularly limited and is preferably 20°C or higher and 400°C or lower, more preferably 50°C or higher and 300°C or lower, further preferably 80°C or higher and 200°C or lower. The sintering temperature of 400°C or lower is preferred because a low heat-resistant substrate can be used. The sintering temperature of 20°C or higher is preferred because the formation of a sintered film tends to proceed sufficiently, resulting in favorable conductivity. The resulting sintered film contains a conductive component derived from the metal component and may additionally contain the component used in the ink, or a non-conductive component according to the sintering temperature.

Among others, for example, heat, plasma, electron beam, or a light source is preferably used as energy at the time of sintering from the viewpoint of adjusting the diffusion and aggregation of the metal component and thereby adjusting the amount of the voids in the fine metal wire. Flash lamp annealing is preferably used. From a similar viewpoint, the sintering time is preferably 100 μsec to 50 msec, more preferably 800 μsec to 10 msec or 1 msec to 2.4 msec. The sintering may be performed using flash lamp annealing a plurality of times, if necessary.

A sintering method with plasma is more preferably used from the viewpoint mentioned above and because this method can promote the fusion of the metal component and produces a conductive film having higher conductivity. From a similar viewpoint, the power of the plasma is preferably 0.5 kW or higher, more preferably 0.6 kW or higher, further preferably 0.7 kW or higher. The upper limit value of the power of the plasma is not particularly limited and can be in a range that has no damage on the transparent substrate or the intermediate layer used. Although the lower limit value of the sintering time depends on the plasma power, the upper limit value is preferably 1000 sec or shorter, more preferably 600 sec or shorter, from the viewpoint of productivity. The sintering may be performed using plasma sintering a plurality of times, if necessary.

(Sealing layer formation step)

The method for producing the conductive film may comprise a sealing layer formation step of forming a sealing layer covering the conductive part after the sintering step. A specific example of the sealing layer formation step includes a method of applying a sealing layer-forming component or a precursor, or a sealing layer-forming composition containing the component or the precursor dissolved or dispersed in a solvent to the conductive part, followed by drying, heating, or UV irradiation, etc. to form a sealing layer. The method for applying the sealing layer is not particularly limited as long as the method coats the conductive part with the layer without exposing the conductive part to the atmosphere. For example, spin coating, die coating, bar coating, or the like can be used. Examples of the sealing layer-forming component include the components listed in the section [Sealing layer]. The sealing layer-forming composition may contain, if necessary, a dispersant, a surfactant, a binder, or the like.

<Physical properties of transparent heater>

The term "transparent" of the transparent heater means that the visible light transmittance is 70% or more. The visible light transmittance is preferably 80% or more, more preferably 85% or more, further preferably 90% or more. In this context, the visible light transmittance can be measured in accordance with JIS K 7361-1: 1997.
The transparent heater is not particularly limited by its purpose and is preferably used for antifogging or antifreezing purposes of transparent members. For example, lighting using a light emitting diode needs to be provided with an antifogging or antifreezing apparatus, which is not required for conventional lighting, because the light emitting diode is low exothermic. Specific examples of the purpose of the transparent heater include antifogging or antifreezing heaters of LED lighting devices for use in automobile head lamps, tail lamps, etc., and antifogging or antifreezing heaters of outdoor LED lighting devices for use in street lights, etc.

<<Second embodiment>>

[Transparent heater]

The transparent heater of the second embodiment comprises a conductive film and a connection part to be connected to a power feeding apparatus. The conductive film comprises a transparent substrate and a conductive part comprising a fine metal wire pattern disposed on one side or both sides of the transparent substrate. The fine metal wire pattern in the conductive film is constituted by a fine metal wire. When the maximum thickness of the fine metal wire on the cross-section of the fine metal wire perpendicular to the direction of drawing of the fine metal wire is defined as T, the line width of the fine metal wire at a height of 0.90T from the fine metal wire interface on the transparent substrate side is defined as $W_{0.90}$ and the line width of the fine metal wire on the fine metal wire interface is defined as $W_0$, $W_{0.90}$ / $W_0$ is 0.40 or more and 0.90 or less.
This transparent heater can provide a transparent heater that is excellent in preservability while having excellent transparency and a low electrical resistance value.
Figure 1 is a conceptual configuration view of the transparent heater according to the second embodiment. Transparent heater 1 of the second embodiment comprises conductive film 2 and connection part 3 connectable to power feeding apparatus 4. The conductive film 2 has transparent substrate 21, conductive part 22 disposed on the transparent substrate 21, and sealing layer 23 formed on the conductive part 22.
The connection part 3 is connected to a fine metal wire constituting a fine metal wire pattern mentioned later. The connection part 3 constitutes at least a portion of a conduction path between the conductive film and the power feeding apparatus which feeds power to the conductive film. In the present embodiment, the connection part 3 is placed at both ends of the conductive film 2. The connection part 3 may be constituted by a conductive layer (metal layer) laminated with the fine metal wire pattern having a predetermined area, as mentioned later, or may be constituted by an assembly of a plurality of lines of the fine metal wire included in the fine metal wire pattern.
The transparent heater 1 according to the second embodiment may comprise power feeding apparatus 4. Current from the power feeding apparatus 4 may be direct current or alternate current and is preferably direct current.

<Conductive film>

The conductive film comprises a transparent substrate and a conductive part comprising a fine metal wire pattern disposed on one side or both sides of the transparent substrate.

Figure 2 is a conceptual top view showing a fine metal wire pattern of a conductive film according to one form of the second embodiment. Fine metal wire pattern 221 in conductive film 2 is a mesh pattern. The conductive film 2 has conductive part 22 comprising the fine metal wire pattern 221 on transparent substrate 21. The fine metal wire pattern 221 is constituted by fine metal wire 222.

The conductive part 22 on the transparent substrate 21 is connected to connection part 3 (not shown). The transparent substrate 21 may have the conductive part 22 on one side or both sides and may have a plurality of conductive parts 22 on one side. The conductive part 22 comprises fine metal wire pattern 221 configured so as to be energizable or chargeable. The conductive film 2 functions as a heating electrode in the transparent heater 1.

[Conductive part]

The conductive part comprises a fine metal wire pattern constituted by a fine metal wire disposed on the transparent substrate. The fine metal wire pattern may be a regular pattern or an irregular pattern.

When the maximum thickness of the fine metal wire on the cross-section of the fine metal wire perpendicular to the direction of drawing of the fine metal wire is defined as T, the line width of the fine metal wire at a height of 0.90T from the fine metal wire interface on the transparent substrate side is defined as $W_{0.90}$ and the line width of the fine metal wire on the fine metal wire interface is defined as $W_0$, $W_{0.90} / W_0$ is 0.40 or more and 0.90 or less, preferably 0.55 or more and 0.85 or less.

The fine metal wire pattern is formed by transferring ink containing a metal component onto a transparent substrate. Therefore, the surface of the fine metal wire is not always a flat surface and has a concave-convex surface. Hence, an angle formed by the surface of the fine metal wire and side wall surface is difficult to define. $W_{0.90} / W_0$ is specified to represent the roundness of this angle.

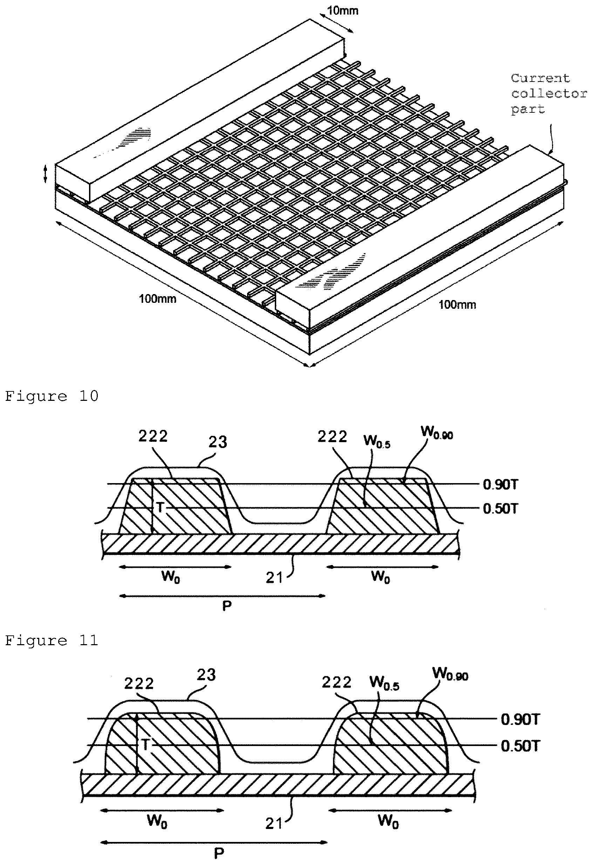

Figure 10 is a partial cross-sectional diagrammatic view of a general conductive film. Figure 11 is a partial cross-sectional diagrammatic view taken along the III-III' line in the conductive film of Figure 2 according to the second embodiment. In a conductive film having fine metal wire 222 having $W_{0.90} / W_0$ of more than 0.90 as shown in Figure 10, a small-thickness portion of sealing layer 23 appears at or near a formed angle as shown in Figure 10 when sealing layer 23 is formed on the fine metal wire 222. By contrast, sealing layer 23 having a sufficient thickness even at or near a formed angle is formed when sealing layer 23 is formed on fine metal wire 222 having $W_{0.90} / W_0$ of 0.90 or less as shown in Figure 11. Hence, the oxidation over time of metal atoms in the fine metal wire is suppressed without forming a small-thickness portion of the sealing layer 23 of Figure 11. This can suppress reduction in conductivity. $W_{0.90} / W_0$ is 0.40 or more, whereby the resistance of the conductive film can be reduced because the cross-sectional area of the fine metal wire can be secured.

When the line width of the fine metal wire at a height of 0.50T from the fine metal wire interface on the transparent substrate side is defined as $W_{0.50}$, $W_{0.50} / W_0$ is preferably 0.70 or more and less than 1.00, more preferably 0.75 or more and 0.99 or less, further preferably 0.80 or more and 0.95 or less. $W_{0.50} / W_0$ is less than 1.00, whereby a small-thickness portion of the sealing layer is less likely to appear in a region of 0.50T. For example, the oxidation of metal atoms in the fine metal wire can be suppressed. As a result, reduction in conductivity over time can be further suppressed. On the other hand, when $W_{0.50} / W_0$ is 0.70 or more, the conductivity of the conductive film can be enhanced because the cross-sectional area of the fine metal wire can be secured.

$W_{0.90} / W_{0.50}$ is preferably 0.50 or more and 0.95 or less, more preferably 0.55 or more and 0.90 or less, further preferably 0.60 or more and 0.85 or less. $W_{0.90} / W_{0.50}$ is 0.95 or less, whereby the sealing layer tends to be able to be more sufficiently thick in a region from 0.90T to 0.50T. Therefore, the oxidation of metal atoms in the fine metal wire can be suppressed. As a result, reduction in conductivity over time can be suppressed, and preservability can be further improved. $W_{0.90} / W_{0.50}$ is 0.50 or more, whereby the conductivity of the conductive film can be further improved because the cross-sectional area of the fine metal wire can be secured.

In the conductive film, $W_{0.50} / W_0$ is preferably larger than $W_{0.90} / W_{0.50}$. This reduces an edge on the cross-section of the fine metal wire and can further improve preservability.

It is preferred that no angle should be formed at a height position at a thickness of 0.90T from the fine metal wire interface on the transparent substrate side. The resulting sealing layer can be formed thick in a region at the height position at a thickness of 0.90T from the fine metal wire interface, and preservability can be further improved.

It is preferred that the line width of the fine metal wire should decrease gradually from a height position at a thickness of 0.50T toward a height position at a thickness of 0.90T from the fine metal wire interface on the transparent substrate side. The resulting sealing layer can be formed thick in a region from 0.90T to 0.50T, and preservability can be further improved.

Since the surface of the fine metal wire is not always a flat surface and often has a concave-convex surface, the cross-sectional shape of the fine metal wire perpendicular to the direction of drawing of the fine metal wire is not strictly defined. Examples thereof include a substantially trapezoidal shape, a substantially semicircular shape, and a substantially semi-elliptical shape. In this context, the "substantially trapezoidal shape" means that a trapezoid leg may be a straight line (side) or a curved line and means that the curved leg of the trapezoid may be an outwardly curved leg or an inwardly curved leg. In the "substantially trapezoidal shape", the upper base may be a straight line (side) or may have irregularities.

In the present specification, the line width of the fine metal wire at a predetermined height from the fine metal wire interface on the cross-section of the fine metal wire perpendicular to the direction of drawing of the fine metal wire can be calculated from an electron microscope photograph of the cross-section of the fine metal wire perpendicular to the direction of drawing of the fine metal wire. Hereinafter, specific measurement methods will be described. The formation of the cross-section of the fine metal wire or SEM observation mentioned later is preferably performed in an inert atmosphere of argon or the like or in vacuum from the viewpoint of preventing the oxidation or contamination of the fine metal wire cross-section.

First, the conductive film is cut to obtain a measurement sample including the cross-section of the fine metal wire perpendicular to the direction of drawing of the fine metal wire. The method for preparing the measurement sample is not particularly limited as long as the method can suppress damage (deformation) on the fine metal wire cross-section ascribable to the formation or processing of the cross-section. Preferably, a processing method using ion beam (e.g., BIB (broad ion beam) and FIB (focused ion beam) processing methods), precision machine polishing, an ultramicrotome, or the like can be used. Particularly, a BIB processing method using argon ion beam is preferably used from the viewpoint of suppressing damage on the fine metal wire cross-section. In the second embodiment and Examples, a BIB processing method is used.

Hereinafter, the method for forming the cross-section of the fine metal wire by use of the BIB processing method will be described. First, the conductive film is cut perpendicularly to the direction of drawing of the fine metal wire to obtain a sample having an exposed cross-section to be observed. In this operation, the cross-section of the sample might have undergone slight deformation due to the cutting process. Accordingly, in the BIB processing method, this cross-section that might have undergone slight deformation is trimmed with broad ion beam to obtain a fine cross-section without deformation. Specifically, first, a shielding plate is closely attached to the surface of the transparent substrate on the side where no conductive part is formed, of the sample. In this operation, the shielding plate is closely attached to the sample so as to expose a portion to be trimmed with broad ion beam and so as not to expose other portions. Subsequently, the sample is irradiated with broad ion beam from above the shielding plate. The exposed portion (cross-section that might have undergone deformation) is thereby trimmed with broad ion beam to obtain a measurement sample having a cross-section without deformation. The irradiation with broad ion beam from the transparent substrate side can produce a finer cross-section of the fine metal wire as compared with irradiation with broad ion beam from the conductive part side.

Alternatively, the conductive film may be cut directly with broad ion beam when cut perpendicularly to the direction of drawing of the fine metal wire. In this case, the shielding plate is closely attached to the side of the transparent substrate where no conductive part is formed in the conductive film. The sample is irradiated with broad ion beam from above the shielding plate.

The measurement sample thus obtained is observed under SEM to obtain an SEM image of the cross-section of the fine metal wire.

Maximum thickness T from the fine metal wire interface on the transparent substrate side to the fine metal wire surface is calculated from the SEM image of the fine metal wire cross-section. In this context, the "maximum thickness T" refers to the maximum thickness among thicknesses from the fine metal wire interface on the transparent substrate side to the fine metal wire surface. The line width of the fine metal wire at a predetermined thickness is calculated on the basis of this maximum thickness T.

Examples of the method for setting $W_{0.90} / W_0$, $W_{0.50} / W_0$, and $W_{0.90} / W_{0.50}$ in the fine metal wire pattern to within their respective desired ranges include the adjustment of ink viscosity using a viscosity adjuster or the like so as to attain a shape within the desired range, and a method of controlling a process time for transferring ink on transfer medium surface to a relief printing plate in a pattern formation step mentioned later.

The fine metal wire preferably has, for example, but not particularly limited to, a conductive component containing at least one or more metal elements selected from the group consisting of gold, silver, copper, and aluminum. Particularly, the conductive component is preferably composed mainly of silver or copper from the viewpoint of cost and conductivity and more preferably composed mainly of copper from the viewpoint of cost. The conductive component contained in the fine metal wire is preferably a reduced form of a metal oxide contained in ink. Use of the reduced form of the metal oxide facilitates closely attaching the fine metal wire to other layers such as a substrate. More specifically, it is preferred to use a copper oxide, i.e., reduced copper, from the viewpoint of further enhancing conductivity. In the second embodiment, the phrase "composed mainly of" means being composed of 50% by mass or more of the component based on the total amount of the fine metal wire.

The fine metal wire may comprise a non-conductive component in addition to the conductive component. Examples of the non-conductive component include, but are not particularly limited to, metal oxides, metal compounds, and organic compounds. Examples of such non-conductive components include metal oxides, metal compounds, and organic compounds that are components derived from components contained in ink mentioned later and remain in the fine metal wire after sintering among the components contained in ink. The content ratio of the conductive component is preferably 50% by mass or more, more preferably 60% by mass or more, further preferably 70% by mass or more. The upper limit of the content ratio of the conductive component is not particularly limited and is 100% by mass. The content ratio of the non-conductive component is preferably 50% by mass or less, more preferably 40% by mass or less, further preferably 30% by mass or less. The lower limit of the content ratio of the non-conductive component is not particularly limited and is 0% by mass.

The non-conductive component contained in the fine metal wire is not particularly limited and is preferably a metal oxide or a metal compound derived from a component contained in ink. The fine metal wire containing such a metal oxide or a metal compound undergoes decrease in volume in the thickness direction from the fine metal wire surface inside the fine wire when the non-conductive component is converted to a conductive metal through chemical reaction such as reduction reaction in a sintering step. The decrease in volume exerts the uneven distribution of the voids inside the fine metal wire.

The substrate on which the fine metal wire is formed is preferably flat. A large area ratio of a fine metal wire interface contacted with air excellent in heat insulating properties causes a high internal temperature of the fine metal wire in a sintering step and rapid progression of the chemical reaction and facilitates exerting the uneven distribution of voids. The prior literature (Japanese Patent Laid-Open No. 2016-139688) describes a method for forming a fine metal wire by forming a concave-convex shape on substrate surface using a thermosetting resin or a light curable resin, and filling the concave parts with metal ink. In this structure, heat generated in the fine metal wire in a sintering step escapes via the resin, thereby delaying the progression of reduction reaction or chemical reaction, and making it difficult to exert the uneven distribution of voids.

(Fine metal wire pattern)

Each of Figures 3 to 5 is a conceptual top view showing a fine metal wire pattern of a conductive film according to an alternative form of the second embodiment. The fine metal wire pattern can be designed according to the purpose of an intended electronic device. Examples thereof include, but are not particularly limited to, a mesh pattern (Figures 2 and 3) formed by a plurality of lines of the fine metal wire intersecting in a net-like form, and a line pattern (Figures 4 and 5) formed by a plurality of substantially parallel lines of the fine metal wire. Alternatively, the fine metal wire pattern may be a combination of the mesh pattern and the line pattern. The mesh of the mesh pattern may have a square or rectangular shape as shown in Figure 2 or may have a polygonal shape such as a rhombus as shown in Figure 3. The fine metal wire constituting the line pattern may be a straight line as shown in Figure 4 or may be a curved line as shown in Figure 5. The fine metal wire constituting the mesh pattern can also be a curved line.

Figure 6 is a partial cross-sectional diagrammatic view taken along the III-III' line in the conductive film of Figure 2. Line width W of the fine metal wire of the second embodiment refers to the line width of the fine metal wire 222 when the fine metal wire 222 is projected onto the surface of the transparent substrate 21 from the side where the fine metal wire pattern 221 is disposed, of the transparent substrate 21. Referring to this Figure 6, the line width W of fine metal wire 222 having a trapezoidal cross-section is the width of the fine metal wire 222 interface on the transparent substrate 21 side. The maximum thickness T (hereinafter, also simply referred to as "thickness T") of the fine metal wire means the maximum thickness when surface roughness is taken into consideration. When thickness measurement is difficult due to a non-flat interface, T is regarded as the distance from a point at the intersection between a straight line joining two points at both ends of the interface and its perpendicular bisector to a point at the intersection between the perpendicular bisector and the outer surface of the fine metal wire. In Figure 6,

0.20T means a position at a distance of $0.20 \times$ thickness T in the perpendicular direction from the fine metal wire 222 interface on the transparent substrate 21 side.
0.50T means a position at a distance of $0.50 \times$ thickness T in the perpendicular direction from the fine metal wire 222 interface on the transparent substrate 21 side.
0.80T means a position at a distance of $0.80 \times$ thickness T in the perpendicular direction from the fine metal wire 222 interface on the transparent substrate 21 side.
Pitch P means the sum of the line width W and the distance between lines of the fine metal wire.

(Line width W)

The line width W of the fine metal wire is preferably 0.1 $\mu$m or larger and 5.0 $\mu$m or smaller, more preferably 0.5 $\mu$m or larger and 4.5 $\mu$m or smaller, further preferably 1.0 $\mu$m or larger and 4.0 $\mu$m or smaller, still further preferably 1.5 $\mu$m or larger and 3.5 $\mu$m or smaller. The line width W of the fine metal wire is 0.1 $\mu$m or larger, whereby conductivity tends to be further improved. Furthermore, reduction in conductivity ascribable to the oxidation, corrosion, or the like of the fine metal wire surface tends to be able to be sufficiently suppressed. A thinner line width of the fine metal wire permits increase in the number of lines of the fine metal wire at the same opening ratio. This attains more uniform electrical field distribution of the conductive film and enables a higher-resolution electronic device to be prepared. If some lines of the fine metal wire are broken, this influence can be compensated for by the other lines of the fine metal wire. On the other hand, the line width W of the fine metal wire is 5.0 $\mu$m or smaller, whereby the visibility of the fine metal wire is further reduced. Thus, the transparency of the conductive film tends to be further improved.

(Line width $W_0$)

The line width $W_0$ of fine metal wire on the fine metal wire interface is the width on the side contacted with the transparent substrate 21, of the fine metal wire 222, as shown in Figure 11. In fine metal wire 222 having a trapezoidal cross-section as shown in Figure 11, the line width $W_0$ is identical with the line width W mentioned above. 0.50T means a position at a distance of $0.50 \times$ thickness T in the perpendicular direction from the side contacted with the transparent substrate 21, of the fine metal wire 222. 0.90T means a position at a distance of $0.90 \times$ thickness T in the perpendicular direction from the side contacted with the transparent substrate 21, of the fine metal wire 222.

The line width $W_0$ of the fine metal wire is, for example, 0.1 $\mu$m or larger and 5.0 $\mu$m or smaller, preferably 0.5 $\mu$m or larger and 4.5 $\mu$m or smaller, more preferably 1.0 $\mu$m or larger and 4.0 $\mu$m or smaller, further preferably 1.5 $\mu$m or larger and 3.5 $\mu$m or smaller. When the line width of the fine metal wire is 0.1 $\mu$m or larger, the conductivity of the fine metal wire can be sufficiently secured. A thinner line width of the fine metal wire permits increase in the number of lines of the fine metal wire at the same opening ratio. This attains more uniform electrical field distribution of the conductive film and enables a higher-resolution electronic device to be prepared. If some lines of the fine metal wire are broken, this influence can be compensated for by the other lines of the fine metal wire. On the other hand, when the line width of the fine metal wire is 5.0 $\mu$m or smaller, the visibility of the fine metal wire is further reduced. Thus, the transparency of the conductive film tends to be further improved.

The thickness T of the fine metal wire is preferably 10 nm or larger and 1,000 nm or smaller. The lower limit of the thickness T is more preferably 50 nm or larger, further preferably 75 nm or larger. The thickness T of the fine metal wire is 10 nm or larger, whereby conductivity tends to be further improved. Reduction in conductivity ascribable to the oxidation, corrosion, or the like of the fine metal wire surface tends to be able to be sufficiently suppressed. On the other hand, the thickness T of the fine metal wire is 1,000 nm or smaller, whereby high transparency can be exerted in a wide view angle.

(Aspect ratio)

The aspect ratio (W/T) represented by the thickness T of the fine metal wire to the line width W of the fine metal wire is preferably 0.05 or more and 1.00 or less. The lower limit of the aspect ratio is more preferably 0.08 or more, further preferably 0.10 or more. The aspect ratio is 0.05 or more, whereby conductivity tends to be able to be further improved without reducing transmittances.

(Pitch)

The pitch P of the fine metal wire pattern is preferably 5 $\mu$m or larger, more preferably 50 $\mu$m or larger, further preferably 100 $\mu$m or larger. The pitch P of the fine metal wire pattern is 5 $\mu$m or larger, whereby a favorable transmittance can be obtained. The pitch P of the fine metal wire pattern is preferably 1,000 $\mu$m or smaller, more preferably 500 $\mu$m or smaller, further preferably 250 $\mu$m or smaller. The pitch P of the fine metal wire pattern is 1,000 $\mu$m or smaller, whereby conductivity tends to be able to be further improved. When the shape of the fine metal wire pattern is a mesh pattern, an opening ratio of 99% can be attained by setting the pitch of a fine metal wire pattern having a line width of 1 $\mu$m to 200 $\mu$m.

The line width, aspect ratio, and pitch of the fine metal wire pattern can be confirmed by observing the conductive film cross-section under an electron microscope or the like. The line width and pitch of the fine metal wire pattern can also be observed under a laser microscope or an optical microscope. Since the pitch and the opening ratio have a relational expression mentioned later, one of these factors can be calculated if the other factor is known. Examples of the method for adjusting the line width, aspect ratio, and pitch of the fine metal wire pattern to the desired ranges include a method of adjusting grooves of a plate for use in a method for producing the conductive film mentioned later, and a method of adjusting the average particle size of metal particles in ink.

(Opening ratio)

The lower limit value of the opening ratio of the fine metal wire pattern is preferably 60% or more, more preferably 70% or more, further preferably 80% or more, particularly preferably 90% or more. The opening ratio of the fine metal wire pattern is equal to or more than the specific value mentioned above, whereby the transmittance of the conductive film tends to be further improved. The upper limit value of the opening ratio of the fine metal wire pattern is preferably less than 100%, more preferably 95% or less, further preferably 90% or less, still further preferably 80% or less, even further preferably 70% or less, particularly preferably 60% or less. The opening ratio of the fine metal wire pattern is equal to or less than the specific value mentioned above, whereby the conductivity of the conductive film tends to be further improved. The opening ratio of the fine metal wire pattern also differs in appropriate value depending on the shape of the fine metal wire pattern. The upper limit value and lower limit value of the opening ratio of the fine metal wire pattern can be appropriately combined according to the required performance (transmittance and sheet resistance) of an intended electronic device.

The "opening ratio of the fine metal wire pattern" can be calculated according to an expression given below as to a region where the fine metal wire pattern is formed on the transparent substrate. The region where the fine metal wire pattern is formed on the transparent substrate is, for example, a range represented by S in Figure 2 and excludes a marginal part and the like where the fine metal wire pattern is not formed.

$$\texttt{Opening ratio = (1 - Area occupied by the fine metal wire}$$
$$\texttt{pattern / Area of the transparent substrate)} \times \texttt{100}$$

Figure 7 is a schematic view of a mesh pattern (grid pattern) having pattern unit 224 of fine metal wire 222. The relational expression of the opening ratio and the pitch differs depending on the shape of the fine metal wire pattern. Their relationship can be calculated as given below. In the case of this mesh pattern, the opening ratio and the pitch have the following relational expression:

$$\texttt{Opening ratio = \{Area of opening part 225 / Area of}$$
$$\texttt{pattern unit 224\}} \times \texttt{100}$$
$$= \texttt{\{((Pitch P1 - Line width W1)} \times \texttt{(Pitch P2 - Line}$$
$$\texttt{width W2)) / (Pitch P1} \times \texttt{Pitch P2)\}} \times \texttt{100}$$

Figure 8 is a schematic view of a line pattern. In the case of this line pattern, the opening ratio and the pitch have the following relational expression:

$$\texttt{Opening ratio = \{(Pitch P - Line width W) / Pitch P\}} \times$$
$$\texttt{100}$$

[Transparent substrate]

The term "transparent" of the transparent substrate means that the visible light transmittance is preferably 80% or more, more preferably 90% or more, further preferably 95% or more. In this context, the visible light transmittance can be measured in accordance with JIS K 7361-1: 1997.

Examples of the material of the transparent substrate include, but are not particularly limited to: transparent inorganic substrates such as glass; and transparent organic substrates such as acrylic acid ester, methacrylic acid ester, polyethylene terephthalate, polybutylene terephthalate, polyethylene naphthalate, polycarbonate, polyarylate, polyvinyl chloride, polyethylene, polypropylene, polystyrene, nylon, aromatic polyamide, polyether ether ketone, polysulfone, polyethersulfone, polyimide, and polyetherimide. Among them, polyethylene terephthalate, polyimide, or polyethylene naphthalate is preferred. Use of polyethylene terephthalate attains better productivity (cost reduction effect) for producing the conductive film and tends to further improve the adhesion of the transparent substrate to the fine metal wire. Use of polyimide tends to further improve the heat resistance of the conductive film. Use of polyethylene naphthalate tends to attain better adhesion of the transparent substrate to the fine metal wire.

The transparent substrate may be made of one material or may be made of two or more materials laminated with each other. When the transparent substrate is multi-layered such that two or more materials are laminated with each other, the transparent substrate may be made of organic substrates or inorganic substrates laminated with each other or may be made of an organic substrate(s) and an inorganic substrate(s) laminated with each other.

The thickness of the transparent substrate is preferably 5 $\mu$m or larger and 500 $\mu$m or smaller, more preferably 10 $\mu$m or larger and 100 $\mu$m or smaller.

[Intermediate layer]

The conductive film of the second embodiment may have an intermediate layer between the transparent substrate and the conductive part. The intermediate layer is capable of contributing to improvement in the adhesion between the transparent substrate and the fine metal wire of the conductive part.

Examples of the component contained in the intermediate layer include, but are not particularly limited to, silicon compounds (e.g., (poly)silanes, (poly)silazanes, (poly)silthianes, (poly)siloxanes, silicon, silicon carbide, silicon oxide, silicon nitride, silicon chloride, silicate, zeolite, and silicide), aluminum compounds (e.g., aluminum oxide), and magnesium compounds (e.g., magnesium fluoride). Among them, at least one member selected from the group consisting of silicon oxide, silicon nitride, aluminum oxide, and magnesium fluoride is preferred. Use of such a component tends to further improve the transparency and durability of the conductive film and attains better productivity (cost reduction effect) for producing the conductive film. The intermediate layer can be prepared by a vapor deposition such as PVD or CVD, or a film formation method of applying and drying an intermediate-forming composition containing the component for the intermediate layer dispersed in a dispersion medium. The intermediate-forming composition may contain, if necessary, a dispersant, a surfactant, a binder, or the like.

The thickness of the intermediate layer is preferably 0.01 $\mu$m or larger and 500 $\mu$m or smaller, more preferably 0.05 $\mu$m or larger and 300 $\mu$m or smaller, further preferably 0.10 $\mu$m or larger and 200 $\mu$m or smaller. The thickness of the intermediate layer is 0.01 $\mu$m or larger, whereby the adhesion of the intermediate layer to the fine metal wire is exerted. The thickness of the intermediate layer is 500 $\mu$m or smaller, whereby the flexibility of the transparent substrate can be ensured.

The intermediate layer laminated on the transparent substrate can prevent plasma or the like from etching the transparent substrate at a site uncovered with the fine metal wire pattern part when a metal component in ink is sintered by a sintering approach such as plasma.

This intermediate layer preferably further has an antistatic function in order to prevent the breaking of the fine metal wire pattern ascribable to static electricity. For the intermediate layer having an antistatic function, it is preferred that the intermediate layer should comprise at least any of a conductive inorganic oxide and a conductive organic compound. Examples of the conductive organic compound include conductive organosilane compounds, aliphatic conjugated polyacetylene, aromatic conjugated poly(p-phenylene), and heterocyclic conjugated polypyrrole. Among them, a conductive organosilane compound is preferred.

The volume resistivity of the intermediate layer is preferably 100 $\Omega$cm or more and 100000 $\Omega$cm or less, more preferably 1000 $\Omega$cm or more and 10000 $\Omega$cm or less, still more preferably 2000 $\Omega$cm or more and 8000 $\Omega$cm or less. The volume resistivity of the intermediate layer is 100000 $\Omega$cm or less, whereby an antistatic function is exerted. The volume resistivity of the intermediate layer is 100 $\Omega$cm or more, whereby the resulting conductive film can be suitably used for purposes such as touch panels for which electrical conduction between fine metal wire patterns is undesirable. The volume resistivity can be adjusted by the content of the component, such as the conductive inorganic oxide or the conductive organic compound, which exerts an antistatic function, in the intermediate layer. When the intermediate layer comprises, for example, highly plasma-resistant silicon oxide (volume specific resistance: $10^{14}$ $\Omega \cdot$cm or more) and an organosilane compound as the conductive organic compound, the volume resistivity can be reduced by increasing the content of the conductive organosilane compound. On the other hand, the volume resistivity is increased by increasing the content of the silicon oxide. Because of the high plasma resistance, a thin film can be formed without impairing optical characteristics.

[Sealing layer]

The conductive film of the second embodiment may be provided with a sealing layer covering the conductive part. The sealing layer may cover only the fine metal wire constituting the conductive part or may cover the surface of the fine metal wire and the transparent substrate (or the intermediate layer).

The material of the sealing layer is not particularly limited as long as the material has translucency and can exert favorable adhesion to the fine metal wire or the transparent substrate (or the intermediate layer). For example, a thermosetting resin such as phenol resin, thermosetting epoxy resin, thermosetting polyimide, melamine resin, urea resin, unsaturated polyester resin, alkyd resin, polyurethane, diallyl phthalate resin, or silicone resin, a UV curable resin such as urethane acrylate, acrylic resin acrylate, epoxy acrylate, silicone acrylate, or UV curable epoxy resin, or a commercially available coating agent can be used.

The thickness of the sealing layer is preferably 0.01 $\mu$m or larger and 1.00 $\mu$m or smaller, more preferably 0.03 $\mu$m or larger and 0.80 $\mu$m or smaller, further preferably 0.05 $\mu$m or larger and 0.50 $\mu$m or smaller. The thickness of the sealing layer 23 is 0.01 $\mu$m or larger, whereby the fine metal wire 222 protected with the sealing layer 23 can be prevented from being oxidized. The thickness of the sealing layer 23 is 1.00 $\mu$m or smaller, whereby the transparency of the conductive film can be improved.

[Other physical properties of conductive film]

(Sheet resistance)

The sheet resistance of the conductive film is preferably 0.1 $\Omega$/sq or more and 50 $\Omega$/sq or less, more preferably 0.1 $\Omega$/sq or more and 40 $\Omega$/sq or less, further preferably 0.1 $\Omega$/sq or more and 30 $\Omega$/sq or less, still further preferably 0.1 $\Omega$/sq or more and 20 $\Omega$/sq or less, even further preferably 0.1 $\Omega$/sq or more and 10 $\Omega$/sq or less. When the sheet resistance is 50 $\Omega$/sq or less, a heater having a high achievable temperature is obtained because of high current that flows in a sheet. A lower sheet resistance tends to suppress power loss. Hence, the achievable temperature of the heater can be elevated by using the conductive film having a low sheet resistance. The sheet resistance of the conductive film can be measured by a method given below.

Figure 9 is a perspective view for illustrating the method for measuring the sheet resistance. First, a rectangular portion throughout which the fine metal wire pattern is disposed is cut out of the conductive film to obtain a measurement sample. Current collector parts for sheet resistance measurements electrically connected to the fine metal wire pattern are formed at both ends of the obtained measurement sample. Electrical resistance R ($\Omega$) between the current collector parts is measured. Sheet resistance $R_s$ ($\Omega$/sq) can be calculated according to the following expression from the obtained electrical resistance R ($\Omega$), distance L (mm) between the current collector parts of the measurement sample, and length D (mm) in the depth direction.

$$R_s = R / L \times D$$

The sheet resistance of the conductive film tends to be reduced with increase in the aspect ratio (thickness) of the fine metal wire. The sheet resistance may be adjusted by selecting the type of the metal material constituting the fine metal wire. A lower sheet resistance tends to improve heat generation efficiency.

(Visible light transmittance)

The visible light transmittance of the conductive film is preferably 80% or more and 100% or less, more preferably 85% or more and 100% or less. In this context, the visible light transmittance can be measured in accordance with JIS K 7361-1: 1997 for total light transmittance by calculating the transmittance in a range of the visible light (360 to 830 nm).

The visible light transmittance of the conductive film tends to be further improved by decreasing the line width of the fine metal wire pattern or by improving the opening ratio thereof.

(Haze)

The haze of the conductive film is preferably 0.01% or more and 5.00% or less. The upper limit of the haze is more preferably 4.00% or less, further preferably 3.00% or less. When the upper limit of the haze is 5.00% or less, the cloudiness of the conductive film to visible light can be sufficiently reduced. The haze described herein can be measured in accordance with JIS K 7136: 2000 for haze.

[Method for producing conductive film]

Examples of the method for producing the conductive film include, but are not particularly limited to, a method having a pattern formation step of forming a pattern on a transparent substrate using ink containing a metal component, and a sintering step of sintering the pattern to form a fine metal wire. In this case, the method for producing the conductive film of the second embodiment may comprise an intermediate layer formation step of forming an intermediate layer on the surface of the transparent substrate, prior to the pattern formation step.

(Intermediate layer formation step)

The intermediate layer formation step is the step of forming an intermediate layer on the surface of the transparent substrate. Examples of the method for forming the intermediate layer include, but are not particularly limited to: a method of forming a vapor-deposited film on the transparent substrate surface by a vapor deposition method such as physical vapor deposition (PVD) or chemical vapor deposition (CVD); a method of forming a coating film by applying a composition for intermediate layer formation onto the transparent substrate surface, followed by drying.

The composition for intermediate layer formation contains any of the components listed as examples of the component contained in the intermediate layer, or a precursor thereof, and a solvent and may contain, if necessary, a surfactant, a dispersant, a binder, or the like.

(Pattern formation step)

The pattern formation step is the step of forming a pattern using ink containing a metal component. The pattern formation step is not particularly limited as long as the step is performed by a plate printing method using a plate having grooves of the desired fine metal wire pattern. Such a method has, for example, the steps of: coating transfer medium surface with ink; allowing the transfer medium surface coated with ink to face the relief part surface of a relief printing plate, and pressing and contacting these surfaces to transfer the ink on the transfer medium surface onto the relief part surface of the relief printing plate; and allowing the transfer medium surface coated with ink to face the surface of the transparent substrate, and pressing and contacting these surfaces to transfer the ink remaining on the transfer medium surface to the surface of the transparent substrate. When the intermediate layer is formed on the transparent substrate, the ink is transferred to the intermediate layer surface.

<<Ink>>

The ink for use in the pattern formation step contains a metal component and a solvent and may contain, if necessary, a surfactant, a dispersant, a reducing agent, or the like. The metal component may be contained as metal particles in the ink or may be contained as a metal complex in the ink. In this context, examples of the metal element species contained in the metal component include, but are not particularly limited to, gold, silver, copper, and aluminum. Among them, silver or copper is preferred, and copper is more preferred.

In the case of using metal particles, their average primary particle size is preferably 100 nm or smaller, more preferably 50 nm or smaller, further preferably 30 nm or smaller. The lower limit of the average primary particle size of the metal particles is not particularly limited and is, for example, 1 nm or larger. The average primary particle size of the metal particles is 100 nm or smaller, whereby the line width W of the resulting fine metal wire can be further thinned. In the second embodiment, the "average primary particle size" refers to the particle size of each individual metal particle (so-called primary particle) and is distinguished from an average secondary particle size which is the particle size of an aggregate (so-called secondary particle) formed by a plurality of metal particles together.

The metal particles may be in the form of a metal oxide such as copper oxide, a metal compound, or core/shell particles having copper in the core part and copper oxide in the shell part. The form of the metal particles can be appropriately determined from the viewpoint of dispersibility and sinterability.

The content of the metal particles in the ink is preferably 1% by mass or more and 40% by mass or less, more preferably 5% by mass or more and 35% by mass or less, further preferably 10% by mass or more and 35% by mass or less, based on the total mass of the ink composition. When the content of the metal particles in the ink is 1% by mass or more based on the total mass of the ink composition, a fine metal wire pattern having conductivity can be obtained. When the content is 40% by mass or less, the ink can be printed in the fine metal wire pattern.

Examples of the surfactant include, but are not particularly limited to, silicone surfactants and fluorine surfactants. Use of such a surfactant improves the coatability of a transfer medium (blanket) with the ink and the smoothness of the ink used in coating and tends to produce a more uniform coating film. The surfactant is preferably configured so as to permit dispersion of the metal component and to be less likely to remain in sintering.

The content of the surfactant in the ink is preferably 0.01% by mass or more and 10% by mass or less, more preferably 0.1% by mass or more and 5% by mass or less, further preferably 0.5% by mass or more and 2% by mass or less, based on the total mass of the ink composition. When the content of the surfactant in the ink is 0.01% by mass or more based on the total mass of the ink composition, coatability with the ink and the smoothness of the ink used in coating can be improved. When the content is 10% by mass or less, a low resistant fine metal wire pattern can be obtained.

Examples of the dispersant include, but are not particularly limited to, a dispersant that noncovalently binds to or interacts with the metal component, and a dispersant that covalently binds to the metal component. Examples of the functional group for noncovalent binding or interaction include dispersants having a phosphoric acid group. Use of such a dispersant tends to further improve the dispersibility of the metal component.

The content of the dispersant in the ink is preferably 0.1% by mass or more and 30% by mass or less, more preferably 1% by mass or more and 20% by mass or less, further preferably 2% by mass or more and 10% by mass or less, based on the total mass of the ink composition. When the content of the dispersant in the ink is 0.1% by mass or more based on the total mass of the ink composition, ink containing the metal particles dispersed therein can be obtained. When the content is 30% by mass or less, a low resistant fine metal wire pattern can be obtained.

Examples of the solvent include: alcohol solvents such as monoalcohols and polyalcohols; alkyl ether solvents; hydrocarbon solvents; ketone solvents; and ester solvents. These solvents may be used singly, or one or more thereof may be used in combination. For example, a monoalcohol having 10 or less carbon atoms and a polyalcohol having 10 or less carbon atoms are used in combination. Use of such a solvent tends to further improve the coatability of a transfer medium (blanket) with the ink, the transferability of the ink from a transfer medium to a relief printing plate, the transferability of the ink from the transfer medium to the transparent substrate, and the dispersibility of the metal component. The solvent is preferably configured so as to permit dispersion of the metal component and to be less likely to remain in sintering.

The content of the solvent in the ink is a balance of the components such as the metal particles, the surfactant, and the dispersant mentioned above and is, for example, preferably 50% by mass or more and 99% by mass or less, more preferably 60% by mass or more and 90% by mass or less, further preferably 70% by mass or more and 80% by mass or less, based on the total mass of the ink composition. When the content of the solvent in the ink is 50% by mass or more based on the total mass of the ink composition, the ink can be printed in the fine metal wire pattern. When the content is 99% by mass or less, a fine metal wire pattern having conductivity can be obtained.

(Sintering step)

The sintering step is the step of sintering a pattern to form a fine metal wire. This can produce a conductive part having the same fine metal wire pattern as the pattern obtained by the application of the ink. The sintering is not particularly limited as long as the method therefor can form a metal component sintered film by the fusion of the metal component. The sintering may be performed in, for example, a sintering furnace, or may be performed using plasma, a heating catalyst, ultraviolet ray, vacuum ultraviolet ray, electron beam, infrared lamp annealing, flash lamp annealing, laser, or the like. If the resulting sintered film is easily oxidized, the sintering is preferably performed in a non-oxidative atmosphere. If the metal oxide or the like is difficult to reduce with only the reducing agent that may be contained in the ink, the sintering is preferably performed in a reductive atmosphere.

The non-oxidative atmosphere is an atmosphere free from an oxidative gas such as oxygen and includes an inert atmosphere and a reductive atmosphere. The inert atmosphere is an atmosphere filled with an inert gas, for example, argon, helium, neon, or nitrogen. The reductive atmosphere refers to an atmosphere where a reductive gas such as hydrogen or carbon monoxide exists. A sintering furnace may be filled with such a gas, and the ink-coated film (dispersion-coated film) can be sintered in a closed system. Alternatively, the coated film may be sintered in the circulated system of a sintering furnace where such a gas is allowed to flow. In the case of sintering the coated film in a non-oxidative atmosphere, it is preferred that the sintering furnace should be temporarily vacuumized so that oxygen in the sintering furnace is removed and replaced with a non-oxidative gas. The sintering may be performed in a pressurized atmosphere or may be performed in a reduced pressure atmosphere.

The sintering temperature is not particularly limited and is preferably 20°C or higher and 400°C or lower, more preferably 50°C or higher and 300°C or lower, further preferably 80°C or higher and 200°C or lower. The sintering temperature of 400°C or lower is preferred because a low heat-resistant substrate can be used. The sintering temperature of 20°C or higher is preferred because the formation of a sintered film tends to proceed sufficiently, resulting in favorable conductivity. The resulting sintered film contains a conductive component derived from the metal component and may additionally contain the component used in the ink, or a non-conductive component according to the sintering temperature.

Among others, for example, heat, plasma, electron beam, or a light source is preferably used as energy at the time of sintering from the viewpoint of adjusting the diffusion and aggregation of the metal component and thereby adjusting the amount of the voids in the fine metal wire. Flash lamp annealing is preferably used. From a similar viewpoint, the sintering time is preferably 100 μsec to 50 msec, more preferably 800 μsec to 10 msec or 1 msec to 2.4 msec. The sintering may be performed using flash lamp annealing a plurality of times, if necessary.

A sintering method with plasma is more preferably used from the viewpoint mentioned above and because this method can promote the fusion of the metal component and produces a conductive film having higher conductivity. From a similar viewpoint, the power of the plasma is preferably 0.5 kW or higher, more preferably 0.6 kW or higher, further preferably 0.7 kW or higher. The upper limit value of the power of the plasma is not particularly limited and can be in a range that has no damage on the transparent substrate or the intermediate layer used. Although the lower limit value of the sintering time depends on the plasma power, the upper limit value is preferably 1000 sec or shorter, more preferably 600 sec or shorter, from the viewpoint of productivity. The sintering may be performed using plasma sintering a plurality of times, if necessary.

(Sealing layer formation step)

The method for producing the conductive film may comprise a sealing layer formation step of forming a sealing layer covering the conductive part after the sintering step. A specific example of the sealing layer formation step includes a method of applying a sealing layer-forming component or a precursor, or a sealing layer-forming composition containing the component or the precursor dissolved or dispersed in a solvent to the conductive part, followed by drying, heating, or UV irradiation, etc. to form a sealing layer. The method for applying the sealing layer is not particularly limited as long as the method coats the conductive part with the layer without exposing the conductive part to the atmosphere. For example, spin coating, die coating, bar coating, or the like can be used. Examples of the sealing layer-forming component include the components listed in the section [Sealing layer]. The sealing layer-forming composition may contain, if necessary, a dispersant, a surfactant, a binder, or the like.

<Physical properties of transparent heater>

The term "transparent" of the transparent heater means that the visible light transmittance is 70% or more. The visible light transmittance is preferably 80% or more, more preferably 85% or more, further preferably 90% or more. In this context, the visible light transmittance can be measured in accordance with JIS K 7361-1: 1997.
The transparent heater is not particularly limited by its purpose and is preferably used for antifogging or antifreezing purposes of transparent members. For example, lighting using a light emitting diode needs to be provided with an antifogging or antifreezing apparatus, which is not required for conventional lighting, because the light emitting diode is low exothermic. Specific examples of the purpose of the transparent heater include antifogging or antifreezing heaters of LED lighting devices for use in automobile head lamps, tail lamps, etc., and antifogging or antifreezing heaters of outdoor LED lighting devices for use in street lights, etc.

Examples

Hereinafter, the embodiments of the present invention will be specifically described with reference to Examples and Comparative Examples. However, the present invention is not limited by these Examples and Comparative Examples by any means.

<<Example A>>

<<Transparent substrate>>

[Preparation of transparent substrate A1]

Polyethylene terephthalate (PET) was used as a transparent substrate. A composition for intermediate layer formation containing silicon oxide nanoparticles and a conductive organosilane compound was applied onto PET and dried so that a film having an antistatic function, having a thickness of 150 nm and a volume resistivity of 5000 $\Omega$cm, and containing silicon oxide was formed as an intermediate layer to obtain transparent substrate A1.

[Preparation of transparent substrate A2]

Transparent substrate A2 was obtained in the same way as the method for preparing the transparent substrate A1 except that polyethylene naphthalate (PEN) was used instead of PET as a transparent substrate.

<<Ink>>

[Ink A1]

20 parts by mass of copper oxide nanoparticles (fine cupric oxide particles manufactured by CIK NanoTek Corp.), 4 parts by mass of a dispersant (manufactured by BYK-Chemie GmbH, product name: Disperbyk-145), 1 part by mass of a surfactant (manufactured by AGC Seimi Chemical Co., Ltd., product name: S-611), and 75 parts by mass of an organic solvent (n-butanol and 2-propylene glycol) were mixed to prepare ink A1 containing the copper oxide nanoparticles dispersed therein.

<Example A1: Preparation of transparent heater>

<<Preparation of conductive film>>

First, ink was applied to transfer medium surface. Subsequently, the transfer medium surface coated with ink was allowed to face a plate having grooves of a fine metal wire pattern, pressed and contacted to transfer a portion of the ink on the transfer medium surface to the relief part surface of the plate. Then, the transfer medium surface coated with the ink except for the transferred ink was allowed to face a transparent substrate, pressed and contacted to transfer the ink having the desired fine metal wire pattern onto the transparent substrate. Subsequently, the ink pattern was sintered at an power of 0.6 kW for 240 sec using a plasma sintering apparatus to obtain a conductive film having a fine metal wire in a mesh pattern. The fine metal wire of the obtained conductive film was unable to be visually confirmed because of the low visibility of the fine metal wire.

<<Formation of sealing layer>>

A measurement sample of 100 mm square was cut out of a portion throughout which the fine metal wire pattern was disposed in the conductive film. Subsequently, silver paste was applied to both ends in the width direction of the surface of the obtained measurement sample using a screen printing apparatus, and dried to form 10 mm wide $\times$ 100 mm deep long connection parts. The connection parts were masked, and a sealing layer having a film thickness of 300 nm was then formed on the fine metal wire by the spin coating method using a coating material (manufactured by 3M Company, product name: NOVEC2702). Then, the masking was removed to expose the connection parts. Table 1 shows various physical properties of the obtained conductive film.

<<Evaluation of conductive film>>

[Sheet resistance]

Sheet resistance $R_{s0}$ ($\Omega$/sq) of the obtained conductive film was measured by the following method: a measurement sample of 100 mm square was cut out of a portion throughout which the fine metal wire pattern was disposed in a transparent heater prepared using the conductive film. Subsequently, silver paste was applied to both ends in the width direction of the surface of the obtained measurement sample using a screen printing apparatus, and dried to form 10 mm wide $\times$ 100 mm deep long current collector parts as shown in Figure 9 (as mentioned above, in Examples in which a 100 mm square conductive film and a transparent heater with 10 mm wide $\times$ 100 mm deep long connection parts formed on a pair of facing sides were prepared, the sheet resistance was measured using the transparent heater because samples of these Examples had substantially no difference from the measurement sample shown in Figure 9). Subsequently, electrical resistance R ($\Omega$) between the connection parts at both ends of the sample was measured by the twoterminal method involving the contact of ohmmeter measuring terminals. The sheet resistance $R_{s0}$ ($\Omega$/sq) was calculated according to an expression given below from the obtained electrical resistance. The results are shown in Table 1 below. The sheet resistance of a conductive film having a sealing layer on the surface was measured by preparing a conductive film in which the current collector parts were exposed from the fine metal wire pattern and the other part of the fine metal wire pattern was covered with the protective layer. Specifically, the current collector parts formed by the method mentioned above were masked. A protective layer was formed. Finally, the masking was removed to prepare a conductive film in which only the current collector parts were exposed.

$$R_{s0} = R / L \times D$$

L: 80 (mm): distance between the current collector parts
D: 100 (mm): depth of the measurement sample

[Visible light transmittance and haze]

The visible light transmittance of the conductive film was measured by calculating a transmittance to visible light having a wavelength of 360 to 830 nm in accordance with JIS K 7361-1: 1997 for total light transmittance. The haze of the conductive film was also measured in accordance with JIS K 7136: 2000. The results are shown in Table 1 below.

[SEM observation of fine metal wire cross-section]

A square-shaped small piece of 5 mm square per side was cut out of the obtained conductive film. A total of 5 sites, the first, second, third, and fourth quadrants and the center, among the small pieces were BIB-processed with argon ion beam by the method mentioned above under conditions involving an acceleration voltage of 4 kV using SM-09010CP manufactured by JEOL Ltd. to prepare a measurement sample including the cross-section of the fine metal wire perpendicular to the direction of drawing of the fine metal wire. Subsequently, the cross-sectional surface of the fine metal wire was treated by Os plasma coating for conferring conductivity.

Subsequently, an SEM image of the cross-section of the fine metal wire was obtained under conditions given below using a scanning transmission electron microscope (SU8220) manufactured by Hitachi High-Technologies Corp.

Acceleration voltage: 1 kV
Emission current: 10 $\mu$A
Measurement magnification: $\times$50,000
Detector: upper detector
Working distance: approximately 3 mm

Thickness T of the fine metal wire was measured from the obtained SEM image of the cross-section of the fine metal wire.

The SEM image of the cross-section of the fine metal wire was analyzed using ImageJ. Specifically, only the cross-section of the fine metal wire was extracted from the SEM image (8 bit), and fine noise contained in the image was removed by median filter treatment. Subsequently, the extracted cross-section of the fine metal wire was binarized. $S_M$, $S_{Vtotal}$, $S_{V0.2}$, and $S_{V0.8}$ were each calculated, and $S_{Vtotal} / S_M$, $S_{V0.2} / S_{Vtotal}$, and $S_{V0.8} / S_{Vtotal}$ were calculated. The results are shown in Table 1 below.

[Flexion resistance (single bending test and repeated bending test)]

The flexion resistance of the transparent heater was evaluated by the following method.

<Rate of change in resistance>

The bending test of the conductive film was conducted, and the rate of change in sheet resistance (%) between before and after the test was measured. In the case of poor flexion resistance, the rate of change in sheet resistance was large due to the breaking of the fine metal wire, etc. In the case of excellent flexion resistance, the rate of change in sheet resistance was small.

First, sheet resistance $R_{s0}$ ($\Omega$/sq) of the conductive film was measured before the bending test by the method described in "Sheet resistance" mentioned above. Subsequently, the conductive film was subjected to the repeated bending test under conditions given below in accordance with JIS C 5016: 1994 using a film bending tester (IMC-1304) manufactured by Imoto Machinery Co., Ltd. as a bending tester.

The conductive film was wrapped by 180°C on a round bar having a diameter of 1 mm such that the bend radius was 0.5 mm. In this state, a single bending test which involved performing only once an operation of moving the film in a certain stroke by holding both ends of the film was conducted under the following conditions.

(Single bending test)

Bend radius: 0.5 mm
Test stroke: 20 mm
The number of flexes: 1
Flexing angle: 180°

(Repeated bending test)

Bend radius: 5 mm
Test stroke: 20 mm

The number of flexes: 10,000
Flexing rate: 90 rpm
Flexing angle: 180°

Finally, sheet resistance $R_{s1}$ (Ω/sq) of the conductive film was measured after the bending test. The rate of change in resistance was calculated according to the following expression.

$$\text{(Rate of change in resistance)} = R_{s1}/R_{s0} \times 100$$

The results are shown in Table 1 below.

<Decrease in achievable temperature>

In the bending test mentioned above, a direct current power supply of 4 V was connected to the connection parts formed in the conductive film before the bending test, and the highest achievable temperature $T_{s1}$ (°C) was measured on the substrate surface at the center of the conductive parts under conditions involving outside air of 25°C. As for the conductive film after the bending test, a direct current power supply of 4 V was also connected to the formed connection parts, and the highest achievable temperature $T_{s0}$ (°C) of the conductive film surface was measured on the substrate surface at the center of the conductive parts under conditions involving outside air of 25°C.

$$\text{(Decrease in achievable temperature)} = T_{s1} - T_{s0}$$

The results are shown in Table 1 below.

<Examples A2 to A10 and Comparative Examples A1 to A4>

A conductive film and a transparent heater were prepared and evaluated by the same operation as in Example A1 except that the transparent substrate, the ink, the line width, and the sintering conditions, etc. were each changed as shown in Table 1. The results are shown in Table 1 below. The fine metal wires of the obtained conductive films and transparent heaters except for the ones of Reference Examples were unable to be visually confirmed because of the low visibility of the fine metal wires.

[Table 1]

| | Transparent substrate No. | Ink No. | Conductive film | | | | | | | | | Physical property | | | | Evaluation | | | |
| | | | Plasma sintering | | | Fine metal wire pattern | | | | | | | | | | Single bending test | | Repeated bending test | |
| | | | Temperature (°C) | Power (kW) | Treatment time (sec) | Line width W (μm) | Thickness T (μm) | $S_{Vtotal}/S_M$ | $S_{V0.2}/S_{Vtotal}$ | $S_{V0.8}/S_{Vtotal}$ | $(S_{V0.2}+S_{V0.8})/S_{Vtotal}$ | Sheet resistance $R_{s0}$ (Ω/sq) | Visible light transmittance (%) | Haze (%) | Achievable temperature (°C) | Rate of change in sheet resistance ($R_{s1}/R_{s0}$) (%) | Decrease in achievable temperature (°C) | Rate of change in sheet resistance ($R_{s1}/R_{s0}$) (%) | Decrease in achievable temperature (°C) |
|---|---|---|---|---|---|---|---|---|---|---|---|---|---|---|---|---|---|---|---|
| Example A1 | A1 | A1 | 50 | 0.6 | 240 | 3.0 | 0.386 | 0.17 | 0.32 | 0.99 | 1.31 | 8.3 | 88 | 2.31 | 63.1 | 102 | 0.2 | 107 | 0.8 |
| Example A2 | A1 | A1 | 50 | 0.6 | 180 | 3.0 | 0.367 | 0.39 | 0.60 | 0.96 | 1.56 | 9.6 | 87 | 1.87 | 62.2 | 105 | 0.3 | 116 | 1.1 |
| Example A3 | A1 | A1 | 50 | 0.6 | 300 | 3.0 | 0.351 | 0.11 | 0.15 | 0.90 | 1.05 | 7.6 | 88 | 2.41 | 64.7 | 104 | 0.3 | 112 | 1.0 |
| Example A4 | A2 | A1 | 50 | 0.6 | 210 | 3.0 | 0.366 | 0.28 | 0.38 | 0.98 | 1.36 | 9.3 | 87 | 1.94 | 62.3 | 103 | 0.2 | 109 | 0.9 |
| Example A5 | A1 | A1 | 50 | 0.6 | 240 | 1.0 | 0.143 | 0.16 | 0.24 | 0.90 | 1.14 | 25.0 | 91 | 2.16 | 46.0 | 102 | 0.1 | 108 | 0.5 |
| Example A6 | A2 | A1 | 50 | 0.6 | 180 | 1.0 | 0.157 | 0.37 | 0.55 | 0.96 | 1.51 | 32.0 | 90 | 1.63 | 39.5 | 105 | 0.2 | 115 | 0.7 |
| Example A7 | A1 | A1 | 50 | 0.6 | 210 | 1.0 | 0.152 | 0.23 | 0.25 | 0.97 | 1.22 | 27.0 | 90 | 2.01 | 44.8 | 104 | 0.1 | 114 | 0.6 |
| Example A8 | A1 | A1 | 50 | 0.6 | 240 | 5.0 | 0.582 | 0.13 | 0.16 | 0.84 | 1.00 | 5.2 | 86 | 2.33 | 68.0 | 107 | 0.5 | 122 | 1.3 |
| Example A9 | A1 | A1 | 50 | 0.6 | 210 | 5.0 | 0.606 | 0.27 | 0.19 | 0.87 | 1.06 | 5.3 | 85 | 2.11 | 67.1 | 109 | 0.7 | 124 | 1.7 |
| Example A10 | A2 | A1 | 50 | 0.6 | 180 | 5.0 | 0.620 | 0.35 | 0.49 | 0.97 | 1.46 | 6.0 | 85 | 1.95 | 66.6 | 106 | 0.6 | 117 | 1.6 |

| | Transparent substrate No. | Ink No. | Conductive film | | | | | | | | | | | | | Evaluation | | | |
| | | | Plasma sintering | | | Fine metal wire pattern | | | | | | Physical property | | | | Single bending test | | Repeated bending test | |
| | | | Temperature (°C) | Power (kW) | Treatment time (sec) | Line width W (μm) | Thickness T (μm) | $S_{Vtotal}/S_M$ | $S_{V0.2}/S_{Vtotal}$ | $S_{V0.8}/S_{Vtotal}$ | $(S_{V0.2}+S_{V0.8})/S_{Vtotal}$ | Sheet resistance $R_{s0}$ (Ω/sq) | Visible light transmittance (%) | Haze (%) | Achievable temperature (°C) | Rate of change in sheet resistance $(R_{s1}/R_{s0})$ (%) | Decrease in achievable temperature (°C) | Rate of change in sheet resistance $(R_{s1}/R_{s0})$ (%) | Decrease in achievable temperature (°C) |
|---|---|---|---|---|---|---|---|---|---|---|---|---|---|---|---|---|---|---|---|
| Comparative Example A1 | A1 | A1 | 50 | 0.6 | 360 | 3.0 | 0.346 | 0.08 | 0.67 | 1.00 | 1.67 | 6.1 | 87 | 2.94 | 65.9 | 154 | 5.1 | 191 | 6.8 |
| Comparative Example A2 | A1 | A1 | 50 | 0.6 | 90 | 3.0 | 0.407 | 0.44 | 0.13 | 0.80 | 0.93 | 52.0 | 88 | 1.54 | 32.1 | 116 | 1.2 | 140 | 3.5 |
| Comparative Example A3 | A1 | A1 | 50 | 0.6 | 420 | 3.0 | 0.332 | 0.04 | 0.63 | 1.00 | 1.63 | 4.9 | 87 | 2.15 | 68.6 | 177 | 6.6 | 215 | 9.7 |
| Comparative Example A4 | A1 | A1 | 50 | 0.6 | 60 | 3.0 | 0.418 | 0.49 | 0.09 | 0.71 | 0.80 | 68.0 | 89 | 1.57 | 30.8 | 118 | 1.4 | 157 | 3.1 |

Examples A1 to A10 and Comparative Examples A1 to A4 demonstrated that a transparent heater having excellent flexion resistance while exhibiting high transparency (i.e., low visibility because of a small line width) and a low electrical resistance value can be obtained by adjusting the ratio of the total cross-sectional area of the voids to the cross-sectional area of the fine metal wire in a line width region of 5 μm or smaller of the fine metal wire to a specific range.

<<Example B>>

<<Transparent substrate>>

[Preparation of transparent substrate B1]

Polyethylene terephthalate (PET) was used as a transparent substrate. An intermediate layer having a thickness of 50 nm and containing silicon oxide was formed thereon by film formation according to the sputtering method to obtain transparent substrate B1.

The transparent substrate B1 was in a form where the intermediate layer was laminated on the transparent substrate PET.

[Preparation of transparent substrate B2]

Transparent substrate B2 was obtained in the same way as the method for preparing the transparent substrate B1 except that polyethylene naphthalate (PEN) was used instead of PET as a transparent substrate.

<<Ink>>

[Ink B1]

20 parts by mass of copper oxide nanoparticles (fine cupric oxide particles manufactured by CIK NanoTek Corp.), 4 parts by mass of a dispersant (manufactured by BYK-Chemie GmbH, product name: Disperbyk-145), 1 part by mass of a surfactant (manufactured by AGC Seimi Chemical Co., Ltd., product name: S-611), and 75 parts by mass of an organic solvent (n-butanol and 2-propylene glycol) were mixed to prepare ink 1 containing the copper oxide nanoparticles dispersed therein.

<Example B1: Preparation of transparent heater>

<<Preparation of conductive film>>

First, ink was applied to transfer medium surface. Subsequently, the transfer medium surface coated with ink was allowed to face a plate having grooves of a fine metal wire pattern, pressed and contacted to transfer a portion of the ink on the transfer medium surface to the relief part surface of the plate. Then, the transfer medium surface coated with the remaining ink was allowed to face the transparent substrate shown in Table 2, pressed and contacted to transfer the ink having the desired fine metal wire pattern onto the transparent substrate. In this formation step, the values of $W_{0.90} / W_0$ and $W_{0.50} / W_0$ in each of Examples and Comparative Examples were controlled by varying process times for transferring the ink to a relief printing plate. A longer process time resulted in smaller values of $W_{0.90} / W_0$ and $W_{0.50} / W_0$. Subsequently, the ink having the fine metal wire pattern was sintered at an power of 0.9 kW for 90 sec in a room temperature environment using a plasma sintering apparatus to obtain a conductive film having a fine metal wire in a mesh pattern.

The fine metal wires of all the obtained conductive films were unable to be visually confirmed because of the low visibility of the fine metal wire.

<<Formation of sealing layer>>

A measurement sample of 100 mm square was cut out of a portion throughout which the fine metal wire pattern was disposed in the conductive film. Subsequently, silver paste was applied to both ends in the width direction of the surface of the obtained measurement sample using a screen printing apparatus, and dried to form 10 mm wide × 100 mm deep long connection parts. The connection parts were masked, and a sealing layer having a film thickness of 300 nm was then formed on the fine metal wire by the spin coating method using a coating material (manufactured by 3M Company, product name: NOVEC2702). Then, the masking was removed to expose the connection parts. Various characteristics of the obtained conductive films are shown in Table 2.

<<Evaluation of conductive film>>

[Sheet resistance]

Sheet resistance $R_{s0}$ ($\Omega$/sq) of the obtained conductive film was measured by the following method: a measurement sample of 100 mm square was cut out of a portion throughout which the fine metal wire pattern was disposed in a transparent heater prepared using the conductive film. Subsequently, silver paste was applied to both ends in the width direction of the surface of the obtained measurement sample using a screen printing apparatus, and dried to form 10 mm wide × 100 mm deep long current collector parts as shown in Figure 11 (as mentioned above, in Examples in which a 100 mm square conductive film and a transparent heater with 10 mm wide × 100 mm deep long connection parts formed on a pair of facing sides were prepared, the sheet resistance was measured using the transparent heater because samples of these Examples had substantially no difference from the measurement sample shown in Figure 11). Subsequently, electrical resistance R ($\Omega$) between the connection parts at both ends of the sample was measured by the twoterminal method involving the contact of ohmmeter measuring terminals. The sheet resistance $R_{s0}$ ($\Omega$/sq) was calculated according to an expression given below from the obtained electrical resistance. The results are shown in Table 2 below. The sheet resistance of a conductive film having a sealing layer on the surface was measured by preparing a conductive film in which the current collector parts were exposed from the fine metal wire pattern and the other part of the fine metal wire pattern was covered with the sealing layer. Specifically, the current collector parts formed by the method mentioned above were masked. A sealing layer was formed. Finally, the masking was removed to prepare a conductive film in which only the current collector parts were exposed.

$$R_{s0} = R / L \times D$$

L: 80 (mm): distance between the current collector parts
D: 100 (mm): depth of the measurement sample

[Visible light transmittance and haze]

The visible light transmittance of the conductive film was measured by calculating a transmittance to visible light having a wavelength of 360 to 830 nm in accordance with JIS K 7361-1: 1997 for total light transmittance. The haze of the conductive film was also measured in accordance with JIS K 7136: 2000. The results are shown in Table 2 below.

[SEM observation of fine metal wire cross-section]

A square small piece of 5 mm square per side was cut out of the obtained conductive film. A total of 5 sites, the first, second, third, and fourth quadrants and the center, among the small pieces were BIB-processed with argon ion beam by the method mentioned above under conditions involving an acceleration voltage of 4 kV using SM-09010CP manufactured by JEOL Ltd. to prepare a measurement sample including the cross-section of the fine metal wire perpendicular to the direction of drawing of the fine metal wire. Subsequently, the cross-sectional surface of the fine metal wire was treated by Os plasma coating for conferring conductivity.
Subsequently, an SEM image of the cross-section of the fine metal wire was obtained under conditions given below using a scanning transmission electron microscope (SU8220) manufactured by Hitachi High-Technologies Corp.

Acceleration voltage: 1 kV
Emission current: 10 $\mu$A
Measurement magnification: ×50,000
Detector: upper detector
Working distance: approximately 3 mm

Maximum thickness T from the fine metal wire interface on the transparent substrate side to the fine metal wire surface was calculated from the obtained SEM image of the cross-section of the fine metal wire. Subsequently, line width $W_0$ of the fine metal wire on the fine metal wire interface, and line widths $W_{0.50}$ and $W_{0.90}$ of the fine metal wire at heights of 0.50T and 0.90T, respectively, from the fine metal wire interface on the transparent substrate side were calculated. $W_{0.90} / W_0$, $W_{0.50} / W_0$, and $W_{0.90} / W_{0.50}$ were each calculated using these values.

[Preservation test]

<Rate of change in resistance>

The prepared conductive film was subjected to a preservation test for 7 days in an environment of 25°C and 50% RH. Then, sheet resistance $R_{s1}$ of the conductive film after the preservation test was measured. The rate of change in sheet resistance (%) from sheet resistance $R_{s0}$ before the preservation test was calculated according to the following expression.

$$\text{(Rate of change in sheet resistance)} = R_{s1} / R_{s0} \times 100$$

<Decrease in achievable temperature>

In the preservation test mentioned above, a direct current power supply of 4 V was connected to the connection parts formed in the conductive film before the preservation test, and the highest achievable temperature $T_{s1}$ (°C) was measured on the substrate surface at the center of the conductive parts under conditions involving outside air of 25°C. As for the conductive film after the preservation test, a direct current power supply of 4 V was also connected to the formed connection parts, and the highest achievable temperature $T_{s0}$ (°C) was measured on the substrate surface at the center of the conductive parts under conditions involving outside air of 25°C.

$$\text{(Decrease in achievable temperature)} = T_{s1} - T_{s0}$$

The results are shown in Table 2 below.

<Examples B2 to B7 and Comparative Examples B1 and B2>

A conductive film and a transparent heater were prepared and evaluated by the same operation as in Example B1 except that the transparent substrate, the ink, the line width, and the sintering conditions, etc. were each changed as shown in Table 2. The results are shown in Table 2 below. The fine metal wires of the obtained conductive films and transparent heaters except for the ones of Reference Examples were unable to be visually confirmed because of the low visibility of the fine metal wires.

[Table 2]

| | Transparent substrate No. | Ink No. | Conductive film | | | | | | | | | Physical property | | | Evaluation | |
| | | | Plasma sintering | | | Fine metal wire pattern | | | | | Sheet resistance $R_{s0}$ (Ω/sq) | Visible light transmittance (%) | Haze (%) | Achievable temperature (°C) | Preservation test | |
| | | | Temperature (°C) | Power (kW) | Treatment time (sec) | Line width (µm) | Thickness (µm) | $W_{0.90}/W_0$ | $W_{0.50}/W_0$ | $W_{0.90}/W_{0.50}$ | | | | | Rate of change in sheet resistance (%) | Decrease in achievable temperature (°C) |
|---|---|---|---|---|---|---|---|---|---|---|---|---|---|---|---|---|
| Example B1 | B1 | B1 | 30 | 0.9 | 90 | 3.0 | 0.364 | 0.63 | 0.71 | 0.89 | 10.4 | 87 | 2.15 | 62.0 | 105 | 0.4 |
| Example B2 | B2 | B1 | 30 | 0.9 | 105 | 3.0 | 0.352 | 0.55 | 0.90 | 0.61 | 9.1 | 87 | 2.34 | 62.5 | 106 | 0.5 |
| Example B3 | B1 | B1 | 30 | 0.9 | 75 | 3.0 | 0.381 | 0.84 | 0.99 | 0.85 | 13.2 | 88 | 1.98 | 60.4 | 103 | 0.2 |
| Example B4 | B2 | B1 | 30 | 0.9 | 90 | 1.0 | 0.132 | 0.71 | 0.75 | 0.95 | 28.0 | 90 | 2.27 | 41.0 | 109 | 0.7 |
| Example B5 | B1 | B1 | 30 | 0.9 | 60 | 1.0 | 0.163 | 0.90 | 1.00 | 0.90 | 35.0 | 91 | 1.95 | 35.8 | 102 | 0.1 |
| Example B6 | B2 | B1 | 30 | 0.9 | 120 | 5.0 | 0.588 | 0.41 | 0.80 | 0.51 | 6.3 | 85 | 2.23 | 65.1 | 106 | 0.4 |
| Example B7 | B1 | B1 | 30 | 0.9 | 105 | 5.0 | 0.614 | 0.53 | 0.95 | 0.56 | 7.1 | 86 | 2.04 | 64.2 | 105 | 0.3 |
| Comparative Example B1 | B1 | B1 | 30 | 0.9 | 150 | 3.0 | 0.335 | 0.32 | 0.65 | 0.49 | 5.3 | 87 | 3.06 | 66.9 | 188 | 6.4 |
| Comparative Example B2 | B1 | B1 | 30 | 0.9 | 30 | 3.0 | 0.431 | 0.95 | 0.99 | 0.96 | 103.0 | 88 | 1.70 | 27.1 | 114 | 0.8 |

Examples B1 to B7 and Comparative Examples B1 and B2 demonstrated that a transparent heater having excellent preservability while exhibiting high transparency (i.e., low visibility because of a small line width) and a low electrical resistance value can be obtained by adjusting the ratio of the total cross-sectional area of the voids to the cross-sectional area of the fine metal wire in a line width region of 5 μm or smaller of the fine metal wire to a specific range.

Industrial Applicability

The transparent heater of the present invention can be suitably used for purposes such as antifogging or antifreezing heaters of LED lighting devices, and thus has industrial applicability.

Reference Signs List

1       Transparent heater
2       Conductive film
21      Transparent substrate
22      Conductive part
221     Fine metal wire pattern
222     Fine metal wire
224     Pattern unit
225     Opening part
23      Sealing layer
3       Connection part
4       Power feeding apparatus

**Claims**

1. A transparent heater comprising a conductive film and a connection part connectable to a power feeding apparatus,

   the conductive film comprising a transparent substrate and a conductive part comprising a fine metal wire pattern disposed on one side or both sides of the transparent substrate, wherein
   the fine metal wire pattern is constituted by a fine metal wire, and
   the fine metal wire has voids, and when the cross-sectional area of the fine metal wire is defined as $S_M$ and the total cross-sectional area of the voids included in the cross-section of the fine metal wire is defined as $S_{Vtotal}$ on the cross-section of the fine metal wire perpendicular to the direction of drawing of the fine metal wire, $S_{Vtotal}$ / $S_M$ is 0.10 or more and 0.40 or less.

2. The transparent heater according to claim 1, wherein
   the fine metal wire has the voids on the fine metal wire interface on the transparent substrate side.

3. The transparent heater according to claim 1 or 2, wherein
   when the maximum thickness of the fine metal wire is defined as T and the cross-sectional area of the voids in a thickness region from the fine metal wire interface to 0.2T on the transparent substrate side is defined as $S_{V0.2}$, $S_{V0.2}$ / $S_{Vtotal}$ is 0.15 or more and 0.60 or less.

4. The transparent heater according to any one of claims 1 to 3, wherein
   when the maximum thickness of the fine metal wire is defined as T and the cross-sectional area of the voids in a thickness region from the fine metal wire interface to 0.8T on the transparent substrate side is defined as $S_{V0.8}$, $S_{V0.8}$ / $S_{Vtotal}$ is 0.80 or more and 1.00 or less.

5. The transparent heater according to any one of claims 1 to 4, wherein
   $(S_{V0.2} + S_{V0.8})$ / $S_{Vtotal}$ is more than 1.00 and 1.60 or less.

6. A transparent heater comprising a conductive film and a connection part connectable to a power feeding apparatus,

   the conductive film comprising a transparent substrate and a conductive part comprising a fine metal wire pattern disposed on one side or both sides of the transparent substrate, wherein
the fine metal wire pattern is constituted by a fine metal wire, and
when the maximum thickness of the fine metal wire on the cross-section of the fine metal wire perpendicular to the direction of drawing of the fine metal wire is defined as T, the line width of the fine metal wire at a height of $0.90T$ from the fine metal wire interface on the transparent substrate side is defined as $W_{0.90}$ and the line width of the fine metal wire on the fine metal wire interface is defined as $W_0$, $W_{0.90} / W_0$ is 0.40 or more and 0.90 or less.

7. The transparent heater according to claim 6, wherein
when the line width of the fine metal wire at a thickness of $0.50T$ from the fine metal wire interface on the transparent substrate side is defined as $W_{0.50}$, $W_{0.50} / W_0$ is 0.70 or more and less than 1.00.

8. The transparent heater according to claim 6 or 7, wherein
$W_{0.90} / W_{0.50}$ is 0.50 or more and 0.95 or less.

9. The transparent heater according to any one of claims 6 to 8, wherein
$W_{0.50} / W_0$ is larger than $W_{0.90} / W_{0.50}$.

10. The transparent heater according to any one of claims 1 to 9, wherein
a line width of the fine metal wire is 0.1 $\mu$m or larger and 5.0 $\mu$m or smaller.

11. The transparent heater according to any one of claims 1 to 10, wherein
an aspect ratio of the fine metal wire is 0.05 or more and 1.00 or less.

12. The transparent heater according to any one of claims 1 to 11, wherein
a sheet resistance of the conductive film is 0.1 $\Omega$/sq or more and 50 $\Omega$/sq or less.

13. The transparent heater according to any one of claims 1 to 12, wherein
a visible light transmittance of the conductive film is 80% or more and 100% or less.

14. The transparent heater according to any one of claims 1 to 13, wherein
a haze of the conductive film is 0.01% or more and 5.00% or less.

15. The transparent heater according to any one of claims 1 to 14, wherein
an opening ratio of the fine metal wire pattern is 80% or more and less than 100%.

16. The transparent heater according to any one of claims 1 to 15, wherein
the fine metal wire pattern is a mesh pattern.

17. The transparent heater according to any one of claims 1 to 16, wherein
the fine metal wire pattern is a line pattern.

18. The transparent heater according to any one of claims 1 to 17, wherein
the fine metal wire comprises at least one or more metal elements selected from the group consisting of gold, silver, copper and aluminum.

19. The transparent heater according to any one of claims 1 to 18, wherein
the conductive film further comprises a sealing layer on the conductive part.

20. The transparent heater according to any one of claims 1 to 19, wherein
the conductive film comprises an intermediate layer between the transparent substrate and the conductive part.

21. The transparent heater according to claim 20, wherein
the intermediate layer comprises at least one member selected from the group consisting of silicon oxide, silicon nitride, aluminum oxide, and magnesium fluoride.

Figure 1

Figure 2

Figure 3

Figure 4

Figure 5

Figure 6

Figure 7

Figure 8

Figure 9

10mm

Current
collector
part

100mm

100mm

Figure 10

222   23   222   $W_{0.5}$   $W_{0.90}$

0.90T

T

0.50T

$W_0$   21   $W_0$

P

Figure 11

222   23   222   $W_{0.5}$   $W_{0.90}$

0.90T

T

0.50T

$W_0$   21   $W_0$

P

## INTERNATIONAL SEARCH REPORT

| International application No. |
|---|
| PCT/JP2021/003031 |

### A. CLASSIFICATION OF SUBJECT MATTER

H05B 3/10(2006.01)i; H05B 3/20(2006.01)i; H01B 5/14(2006.01)i
FI: H05B3/20 318; H01B5/14 A.; H01B5/14 B; H05B3/10 A

According to International Patent Classification (IPC) or to both national classification and IPC

### B. FIELDS SEARCHED

Minimum documentation searched (classification system followed by classification symbols)
H05B3/10; H05B3/20; H01B5/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | US 2018/0159014 A1 (INDUSTRIAL TECHNOLOGY RESEARCH INSTITUTE) 07 June 2018 (2018-06-07) fig. 5 | 1-5 |
| Y | JP 2013-516043 A (LG CHEM, LTD.) 09 May 2013 (2013-05-09) paragraphs [0014]-[0048], fig. 2, 12 | 6-21 |
| Y | JP 2004-205353 A (DENSO CORP.) 22 July 2004 (2004-07-22) paragraph [0012] | 6-21 |
| Y | WO 2007/034832 A1 (KYOCERA CORP.) 29 March 2007 (2007-03-29) paragraph [0035] | 6-21 |
| Y | JP 2010-102802 A (FUJI ELECTRIC DEVICE TECHNOLOGY CO., LTD.) 06 May 2010 (2010-05-06) paragraph [0012] | 6-21 |
| Y | JP 2018-50135 A (TAIYO YUDEN CO., LTD.) 29 March 2018 (2018-03-29) paragraph [0044] | 6-21 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 March 2021 (04.03.2021) | 16 March 2021 (16.03.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/003031 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | US 2018/0338352 A1 (MURATA MANUFACTURING CO., LTD.) 22 November 2018 (2018-11-22) fig. 2 | 6-21 |
| Y | US 2017/0171916 A1 (SAMSUNG ELECTRONICS CO., LTD.) 15 June 2017 (2017-06-15) paragraph [0066] | 20-21 |
| Y | US 2016/0249413 A1 (ELECTRONICS AND TELECOMMUNICATIONS RESEARCH INSTITUTE) 25 August 2016 (2016-08-25) paragraph [0043] | 20-21 |
| X Y | JP 2018-138456 A (DAINIPPON PRINTING CO., LTD.) 06 September 2018 (2018-09-06) paragraphs [0021]-[0048], fig. 2-7 | 6 6-21 |

Form PCT/ISA/210 (continuation of second sheet) (January 2015)

INTERNATIONAL SEARCH REPORT

Information on patent family members

| International application No. |
| --- |
| PCT/JP2021/003031 |

| Patent Documents referred in the Report | Publication Date | Patent Family | Publication Date |
| --- | --- | --- | --- |
| US 2018/0159014 A1 | 07 Jun. 2018 | CN 108156678 A | |
| JP 2013-516043 A | 09 May 2013 | US 2012/0261404 A1 fig. 2, 12, paragraphs [0022]-[0056] WO 2011/081456 A2 EP 2521422 A2 KR 10-2011-0076837 A CN 102687586 A | |
| JP 2004-205353 A | 22 Jul. 2004 | US 2004/0118202 A1 paragraph [0276] DE 10358281 A1 | |
| WO 2007/034832 A1 | 29 Mar. 2007 | US 2009/0121584 A1 paragraphs [0063]-[0065] EP 1947764 A1 CN 101268611 A | |
| JP 2010-102802 A | 06 May 2010 | (Family: none) | |
| JP 2018-50135 A | 29 Mar. 2018 | (Family: none) | |
| US 2018/0338352 A1 | 22 Nov. 2018 | (Family: none) | |
| US 2017/0171916 A1 | 15 Jun. 2017 | EP 3179826 A2 KR 10-2017-0068378 A CN 106961751 A | |
| US 2016/024913 A1 | 25 Aug. 2016 | KR 10-2016-0103499 A | |
| JP 2018-138456 A | 06 Sep. 2018 | (Family: none) | |

Form PCT/ISA/210 (patent family annex) (January 2015)

## REFERENCES CITED IN THE DESCRIPTION

**Patent documents cited in the description**

- WO 2014034920 A
- WO 2017098054 A
- WO 2016139688 A
- JP 2016139688 A

**Non-patent literature cited in the description**

- *Nature Communications,* vol. 7 (11402